# EUROPÄISCHE PATENTSCHRIFT

(11) **EP 3 747 251 B1**
(45) Veröffentlichungstag und Bekanntmachung des Hinweises auf die Patenterteilung: **31.07.2024**
(21) Anmeldenummer: 20187816.2
(22) Anmeldetag: 08.06.2018
(51) Int. Cl.: A01D 34/00, A01D 34/90, G05D 1/00

(54) **GRÜNFLÄCHENBEARBEITUNGSSYSTEM, VERFAHREN ZUM ERFASSEN MINDESTENS EINES ABSCHNITTS EINES BEGRENZUNGSRANDS EINER ZU BEARBEITENDEN FLÄCHE UND VERFAHREN ZUM BETREIBEN EINES AUTONOMEN MOBILEN GRÜNFLÄCHENBEARBEITUNGSROBOTERS**
LAWN CARE SYSTEM, METHOD FOR SENSING AT LEAST ONE SECTION OF A DELIMITING EDGE OF AN AREA TO BE CARED FOR, AND METHOD FOR OPERATING AN AUTONOMOUS MOBILE LAWN CARE ROBOT
SYSTÈME DE TRAITEMENT D'ESPACES VERTS, PROCÉDÉ DE DÉTECTION D'AU MOINS UND PORTION D'UN BORD DE DÉLIMITATION D'UNE SURFACE À TRAITER ET PROCÉDÉ POUR FAIRE FONCTIONNER UN ROBOT DE TRAITEMENT D'ESPACES VERTS MOBILE AUTONOME

(30) Priorität: 09.06.2017 EP 17175378
(43) Veröffentlichungstag der Anmeldung: 09.12.2020
(62) Teilanmeldung aus: 18729973.0
(73) Patentinhaber: Andreas Stihl AG & Co. KG, 71336 Waiblingen (DE)
(72) Erfinder: Ritzer, Peter, 6341 Ebbs (AT); Hans, Matthias, 83088 Kiefersfelden (DE); Strohmaier, Andreas, 71554 Weissach (DE)
(74) Vertreter: Patentanwälte Ruff, Wilhelm, Beier, Dauster & Partner mbB

(56) Entgegenhaltungen:
- EP-A1- 3 540 552
- EP-A2- 2 806 325
- WO-A1-2012/089679
- DE-A1- 102012 221 572

## Beschreibung

Die Erfindung bezieht sich auf ein Grünflächenbearbeitungssystem, ein Verfahren zum Erfassen mindestens eines Abschnitts eines Begrenzungsrands einer zu bearbeitenden Fläche mittels eines, insbesondere solchen, Grünflächenbearbeitungssystems und ein Verfahren zum Betreiben eines autonomen mobilen Grünflächenbearbeitungsroboters eines, insbesondere solchen, Grünflächenbearbeitungssystems auf einer solchen zu bearbeitenden Fläche mit einem solchen Begrenzungsrand.

Bekannt ist ein Grünflächenbearbeitungssystem mit einer Motorsense.

Insbesondere offenbart die US 2014/0208599 A1 eine Arbeitsmaschine aufweisend einen Motor und einen Sensor angeordnet in einer Fronteinheit, einen Motorcontroller angeordnet in einer Heckeinheit, eine Motorleistungsleitung und eine Sensorsignalleitung angeordnet entlang eines Operationsstabs, und ein Paar von elektrischen Konnektoren. Die Motorleistungsleitung weist erste und zweite Teilmotorleistungsleitungen angeordnet entlang der ersten und zweiten Teilstäbe jeweils auf. Die Sensorsignalleitung weist erste und zweite Teilsensorsignalleitungen angeordnet entlang der ersten und zweiten Teilstäbe jeweils auf. Ein erster elektrischer Konnektor weist erste elektrische Terminals auf, von denen jedes mit mindestens einer korrespondierenden der ersten Teilmotorleistungsleitung oder der ersten Teilsensorsignalleitung gekoppelt ist, und ein zweiter elektrischer Konnektor weist zweite elektrische Terminals auf, von denen jedes mit mindestens einer korrespondierenden der zweiten Teilmotorleistungsleitung oder der zweiten Teilsensorsignalleitung gekoppelt ist.

Die EP 2 806 325 A2 offenbart ein domestisches robotisches System aufweisend einen Roboter, welcher dazu programmiert ist, sich innerhalb eines Arbeitsbereichs definiert durch eine Grenze zu bewegen, und einen oder mehrere Grenzdistanzsensoren hat, die ihn dazu befähigen, die aktuelle Distanz von der Grenze zu schätzen. Der Roboter ist dazu programmiert, erstens sich über die Arbeitsfläche zu bewegen, und zweitens dann, wenn die Grenzdistanzsensoren anzeigen, dass der Roboter eine Distanz X von der Grenze ist und sich der Grenze nähert, zu beginnen, eine graduelle Wende auszuführen. Diese graduelle Wende ist derart, dass der Roboter progressiv die Richtung ändert, während er sich weiter über die genannte Arbeitsfläche bewegt; und der Roboter übergeht vom Nähern der Grenze zum Entfernen von der Grenze. Auch ist der Roboter dazu programmiert, einen Pfad für die graduelle Wende derart zu berechnen, dass während der graduellen Wende der Roboter sich der Grenze zu einer vorgegebenen nächsten Distanz nähert, E, und sich danach von der Grenze entfernt.

Die WO 2012/089679 A1 betrifft ein Verfahren zur Bearbeitung einer Fläche mittels eines Roboter-Fahrzeugs. Das Roboter-Fahrzeug weist eine Steuerung auf, in der Daten bezüglich des Umrisses der zu bearbeitenden Fläche abgelegt sind. Lokalisierungsmittel sind vorhanden, die die Position des Roboter-Fahrzeugs, insbesondere in Bezug zu der zu bearbeitenden Fläche ermitteln. Das Verfahren umfasst folgende Schritte: Einteilen der zu bearbeitenden Fläche in Einzelsegmente, Klassifizierung jedes Einzelsegments in eine Eigenschaftsklasse, nacheinander Anfahren und Bearbeiten jedes Einzelsegments. Jedes Einzelsegment wird mit einer seiner Eigenschaftsklasse entsprechenden Bearbeitungsstrategie bearbeitet.

Die EP 3 540 552 A1 betrifft ein automatisches Arbeitssystem mit einer selbstbewegenden Vorrichtung und einer Positioniervorrichtung. Die sich selbstbewegende Vorrichtung umfasst ein Bewegungsmodul, ein Aufgabenausführungsmodul und eine Antriebsschaltung, die mit dem Bewegungsmodul und dem Aufgabenausführungsmodul verbunden ist. Die Antriebsschaltung treibt das Bewegungsmodul an, damit sich die selbstbewegende Vorrichtung bewegen kann, und treibt das Aufgabenausführungsmodul an, um eine Arbeitsaufgabe auszuführen. Die Positionierungsvorrichtung ist dazu konfiguriert, eine aktuelle Position der selbstbewegten Vorrichtung zu erfassen. Das automatische Arbeitssystem umfasst: eine Speichereinheit, die zum Speichern einer Arbeitsbereichskarte konfiguriert ist, und: eine Kartenbestätigungsprozedur, wobei die Kartenbestätigungsprozedur umfasst: Bereitstellen einer Antriebsschaltungsanweisung, sich entlang einer Arbeitsbereichsgrenze zu bewegen, und Empfangen eines Bestätigungssignals von einen Benutzer zum Abschließen der Kartenbestätigungsprozedur; und eine Arbeitsprozedur, die das Bereitstellen einer Antriebsschaltungsanweisung umfasst, sich innerhalb eines durch die Karte definierten Arbeitsbereichs zu bewegen und die Arbeitsaufgabe auszuführen; und ein Steuermodul, das dazu konfiguriert ist, eine Ausgabe der Positionierungsvorrichtung zu überwachen, um die Kartenbestätigungsprozedur auszuführen und die Arbeitsprozedur auszuführen, nachdem die Kartenbestätigungsprozedur abgeschlossen ist.

Der Erfindung liegt als Aufgabe die Bereitstellung eines Grünflächenbearbeitungssystems zugrunde, das verbesserte Eigenschaften aufweist, insbesondere mehr Funktionalitäten. Des Weiteren liegt der Erfindung als Aufgabe die Bereitstellung eines Verfahrens zum Erfassen mindestens eines Abschnitts eines Begrenzungsrands einer zu bearbeitenden Fläche und eines Verfahrens zum Betreiben eines autonomen mobilen Grünflächenbearbeitungsroboters zugrunde.

Die Erfindung löst diese Aufgabe durch die Bereitstellung eines Grünflächenbearbeitungssystems mit den Merkmalen des Anspruchs 1. Des Weiteren wird die der Erfindung zugrundeliegende Aufgabe durch ein Verfahren mit den Merkmalen des Anspruchs 13 und/oder des Anspruchs 14 gelöst. Vorteilhafte Weiterbildungen und/oder Ausgestaltungen der Erfindung sind in den abhängigen Ansprüchen beschrieben.

Das erfindungsgemäße Grünflächenbearbeitungssystem weist einen autonomen mobilen Grünflächenbearbeitungsroboter, ein Randerfassungsgerät, ein Aufzeichnungsgerät und eine Steuereinheit auf. Das Randerfassungsgerät ist zur Erfassung von positionsbezogenen Daten Begrenzungsrands einer zu bearbeitenden Fläche ausgebildet. Des Weiteren ist das Randerfassungsgerät zur lösbaren Befestigung an dem Grünflächenbearbeitungsroboter ausgebildet.

Das Aufzeichnungsgerät ist dazu ausgebildet, während das Randerfassungsgerät von dem Grünflächenbearbeitungsroboter gelöst ist und, insbesondere zeitgleich, entlang, insbesondere eines Abschnitts, des Begrenzungsrands geführt wird, insbesondere durch den Benutzer, eine Abfolge von mittels des Randerfassungsgeräts erfassten Randdaten, insbesondere mindestens des Abschnitts, des Begrenzungsrands aufzuzeichnen, insbesondere nur bei gelöstem Randerfassungsgerät aufzuzeichnen. Die Steuereinheit ist dazu ausgebildet, während das Randerfassungsgerät an dem Grünflächenbearbeitungsroboter befestigt ist, insbesondere zeitgleich, eine Bewegung des Grünflächenbearbeitungsroboters auf der zu bearbeitenden Fläche in Abhängigkeit von, insbesondere mittels des Randerfassungsgeräts erfassten, Roboterdaten und von der aufgezeichneten Abfolge von Randdaten derart zu steuern, insbesondere nur bei befestigtem Randerfassungsgerät zu steuern, dass der Grünflächenbearbeitungsroboter auf der zu bearbeitenden Fläche bleibt, insbesondere innerhalb des Begrenzungsrands.

Das Grünflächenbearbeitungssystem ermöglicht ein Erfassen, insbesondere des mindestens einen Abschnitts, des Begrenzungsrands der zu bearbeitenden Fläche mittels des Randerfassungsgeräts und des Aufzeichnungsgeräts, insbesondere ohne dass der Grünflächenbearbeitungsroboter, insbesondere hierfür, entlang, insbesondere des Abschnitts, des Begrenzungsrands geführt zu werden braucht, insbesondere durch den Benutzer. Somit kann das Grünflächenbearbeitungssystem benutzerfreundlich sein. Des Weiteren kann das Grünflächenbearbeitungssystem ein Auskommen mit dem, insbesondere einzigen, Randerfassungsgerät ermöglichen beziehungsweise das, insbesondere einzige, Randerfassungsgerät kann genügen. In anderen Worten: auf ein weiteres Randerfassungsgerät kann verzichtet werden. Somit kann das Grünflächenbearbeitungssystem kostengünstig sein. Zusätzlich kann ein Unterschied beziehungsweise ein Offset betreffend die Randerfassung, wie er insbesondere im Fall eines Randerfassungsgeräts zur Erfassung der Randdaten und eines weiteren Randerfassungsgeräts zur Erfassung der Roboterdaten auftreten könnte, vermieden werden. Somit kann das Grünflächenbearbeitungssystem beziehungsweise die Verwendung desselben Randerfassungsgeräts zur Erfassung sowohl der Randdaten als auch der Roboterdaten eine relativ genaue Randerfassung, insbesondere eine relativ genaue Positionsbestimmung, ermöglichen.

Weiter zusätzlich kann das Randerfassungsgerät zum Erfassen und zum Aufzeichnen der Randdaten und/oder zum Führen, insbesondere durch den Benutzer, von dem Grünflächenbearbeitungsroboter gelöst werden, insbesondere durch den Benutzer. Insbesondere kann gelöst als nicht befestigt oder, insbesondere räumlich, getrennt bezeichnet werden. Nach dem Erfassen und dem Aufzeichnen und/oder dem Führen kann das Randerfassungsgerät an dem Grünflächenbearbeitungsroboter befestigt werden, insbesondere durch den Benutzer. In anderen Worten: zum Steuern der Bewegung des Grünflächenbearbeitungsroboters kann das Randerfassungsgerät an dem Grünflächenbearbeitungsroboter befestigt werden, insbesondere durch den Benutzer. Weiter zusätzlich oder alternativ kann die Befestigung eine formschlüssige, kraftschlüssige und/oder stoffschlüssige Verbindung aufweisen. Weiter zusätzlich oder alternativ kann das Randerfassungsgerät, wenn es an dem Grünflächenbearbeitungsroboter befestigt ist, vor Wasser geschützt sein, insbesondere durch den Grünflächenbearbeitungsroboter. Weiter zusätzlich oder alternativ kann der Grünflächenbearbeitungsroboter einen, insbesondere wassergeschützten, insbesondere wasserdichten, Befestigungsbereich zur lösbaren Befestigung des Randerfassungsgeräts aufweisen. Weiter zusätzlich oder alternativ können/kann der Grünflächenbearbeitungsroboter und/oder das Randerfassungsgerät zur orientierten beziehungswiese ausgerichteten Befestigung ausgebildet sein. Weiter zusätzlich oder alternativ kann das Randerfassungsgerät als Randerkennungsgerät oder Roboterranderfassungsgerät bezeichnet werden. Weiter zusätzlich oder alternativ kann das Randerfassungsgerät zum Zusammenwirken mit dem Grünflächenbearbeitungsroboter und/oder dem Aufzeichnungsgerät und/oder der Steuereinheit ausgebildet sein.

Das Randerfassungsgerät umfasst einen wiederaufladbaren, insbesondere elektrischen, insbesondere elektrochemischen, Energiespeicher, insbesondere einen Akkumulator, zur Versorgung des gelösten Randerfassungsgeräts mit Betriebsenergie, insbesondere elektrischer Betriebsenergie. Der Grünflächenbearbeitungsroboter ist zur Wiederaufladung, insbesondere zur kabellosen, insbesondere induktiven, und/oder kabelgebundenen Wiederaufladung, des Energiespeichers des befestigten Randerfassungsgeräts ausgebildet.

In einer Weiterbildung der Erfindung ist das Randerfassungsgerät portabel ausgebildet. Zusätzlich oder alternativ ist das Aufzeichnungsgerät portabel ausgebildet. Insbesondere kann portabel als mobil oder handgeführt, insbesondere handgetragen, bezeichnet werden. Handgeführtes, insbesondere handgetragenes, Gerät kann bedeuten, dass das Gerät eine maximale Masse von 50 Kilogramm (kg), insbesondere von 20 kg, insbesondere von 10 kg, aufweisen kann.

In einer Weiterbildung der Erfindung umfasst das Randerfassungsgerät ein, insbesondere das, Positionsbestimmungsgerät zur Bestimmung von Positionskoordinaten, insbesondere des Begrenzungsrands der zu bearbeitenden Fläche. Das Aufzeichnungsgerät ist dazu ausgebildet, eine, insbesondere die, Abfolge von mittels des Positionsbestimmungsgeräts bestimmten Randpositionskoordinaten, insbesondere mindestens des Abschnitts, des Begrenzungsrands aufzuzeichnen und/oder zu speichern. Die Steuereinheit ist dazu ausgebildet, die Bewegung des Grünflächenbearbeitungsroboters auf der zu bearbeitenden Fläche in Abhängigkeit, insbesondere von mittels des Positionsbestimmungsgeräts bestimmten Roboterpositionskoordinaten und, von der aufgezeichneten Abfolge von Randpositionskoordinaten derart zu steuern, dass der Grünflächenbearbeitungsroboter auf der zu bearbeitenden Fläche bleibt, insbesondere innerhalb des Begrenzungsrands. Insbesondere kann das Positionsbestimmungsgerät zur lösbaren Befestigung an dem Grünflächenbearbeitungsroboter ausgebildet sein. Zusätzlich oder alternativ kann das Positionsbestimmungsgerät das zuvor beschriebene Roboterpositionsbestimmungsgerät sein. Weiter zusätzlich oder alternativ kann das Aufzeichnungsgerät das zuvor beschriebene Positionsaufzeichnungsgerät sein. Weiter zusätzlich oder alternativ können Randpositionskoordinaten, insbesondere während das Positionsbestimmungsgerät von dem Grünflächenbearbeitungsroboter gelöst ist und entlang des Begrenzungsrands geführt wird, Positionskoordinaten des Begrenzungsrands bezeichnen. Weiter zusätzlich oder alternativ können Roboterpositionskoordinaten, insbesondere während das Positionsbestimmungsgerät an dem Grünflächenbearbeitungsroboter befestigt ist, Positionskoordinaten des Grünflächenbearbeitungsroboters bezeichnen.

In einer Ausgestaltung der Erfindung umfasst das Positionsbestimmungsgerät einen Satelliten-Positionsbestimmungsempfänger zur Bestimmung von Positionskoordinaten. Zusätzlich oder alternativ umfasst das Positionsbestimmungsgerät ein lokales Positionierungssystemgerät zur Bestimmung von Positionskoordinaten. Insbesondere kann der Satelliten-Positionsbestimmungsempfänger ganz oder teilweise ausgebildet sein, wie zuvor beschrieben. Zusätzlich oder alternativ kann der Satelliten-Positionsbestimmungsempfänger als Roboter-Satelliten-Positionsbestimmungsempfänger bezeichnet werden. Weiter zusätzlich oder alternativ kann das lokale Positionierungssystemgerät ganz oder teilweise ausgebildet sein, wie zuvor beschrieben. Weiter zusätzlich oder alternativ kann das lokale Positionierungssystemgerät als Roboter-Lokales-Positionierungssystemgerät bezeichnet werden.

In einer Weiterbildung der Erfindung umfasst das Randerfassungsgerät, insbesondere mindestens, eine Kamera zur Aufnahme von Bildern, insbesondere des Begrenzungsrands der zu bearbeitenden Fläche. Das Aufzeichnungsgerät ist dazu ausgebildet, eine Abfolge von mittels der Kamera aufgenommenen Randbildern, insbesondere mindestens des Abschnitts, des Begrenzungsrands aufzuzeichnen und/oder zu speichern. Die Steuereinheit ist dazu ausgebildet, die Bewegung des Grünflächenbearbeitungsroboters auf der zu bearbeitenden Fläche in Abhängigkeit, insbesondere von mittels der Kamera aufgenommenen Roboterbildern und, von der aufgezeichneten Abfolge von Randbildern derart zu steuern, dass der Grünflächenbearbeitungsroboter auf der zu bearbeitenden Fläche bleibt, insbesondere innerhalb des Begrenzungsrands. Insbesondere kann die Kamera zur lösbaren Befestigung an dem Grünflächenbearbeitungsroboter ausgebildet sein. Zusätzlich oder alternativ kann die Kamera als Roboterkamera bezeichnet werden. Weiter zusätzlich oder alternativ kann das Aufzeichnungsgerät als Bilderaufzeichnungsgerät bezeichnet werden. Weiter zusätzlich oder alternativ können Randbilder, insbesondere während die Kamera von dem Grünflächenbearbeitungsroboter gelöst ist und entlang des Begrenzungsrands geführt wird, Bilder des Begrenzungsrands bezeichnen. Weiter zusätzlich oder alternativ können Roboterbilder, insbesondere während die Kamera an dem Grünflächenbearbeitungsroboter befestigt ist, Bilder, insbesondere des Begrenzungsrands, aufgenommen vom Grünflächenbearbeitungsroboter aus bezeichnen.

In einer Weiterbildung der Erfindung weist das Grünflächenbearbeitungssystem eine Führvorrichtung auf. Die Führvorrichtung weist eine Benutzerführvorrichtung auf. Die Benutzerführvorrichtung ist zum Führen der Führvorrichtung durch den Benutzer ausgebildet. Des Weiteren weist die Führvorrichtung einen von der Benutzerführvorrichtung mit einem Abstand, insbesondere von minimal 50 (Zentimeter), insbesondere von minimal 100 cm, und/oder von maximal 200 cm, insbesondere von maximal 150 cm, angeordneten Befestigungsbereich auf. Das Randerfassungsgerät ist zur lösbaren Befestigung an der Führvorrichtung im Befestigungsbereich ausgebildet. Die Führvorrichtung ermöglicht ein komfortables beziehungsweise bequemes Führen des, insbesondere an der Führvorrichtung im Befestigungsbereich befestigten, Randerfassungsgeräts. Insbesondere kann die Führvorrichtung ein Führen des, insbesondere von dem Grünflächenbearbeitungsroboter gelösten, Randerfassungsgeräts in einer Höhe und/oder einem, insbesondere seitlichen beziehungsweise lateralen, Abstand in Bezug auf den Begrenzungsrand ermöglichen, wobei die Höhe einer Höhe und/oder der Abstand einem Abstand bei, insbesondere zeitlich nachfolgender, Befestigung am Grünflächenbearbeitungsroboter gleichen können/kann. Zusätzlich oder alternativ kann die Führvorrichtung eine aufrechte Haltung des Benutzers beim Führen ermöglichen. Insbesondere kann die Führvorrichtung von dem Grünflächenbearbeitungsroboter verschieden sein. Insbesondere braucht die Führvorrichtung nicht zum Führen des Grünflächenbearbeitungsroboters ausgebildet sein. Zusätzlich oder alternativ kann die Steuereinheit zur Berücksichtigung eines, insbesondere räumlichen, Offsets der Befestigung des Randerfassungsgeräts an der Führvorrichtung und an dem Grünflächenbearbeitungsroboter beziehungsweise der Randdaten und der Roboterdaten ausgebildet sein. Weiter zusätzlich oder alternativ können/kann die Führvorrichtung und/oder das Randerfassungsgerät zur orientierten beziehungswiese ausgerichteten Befestigung ausgebildet sein. Weiter zusätzlich oder alternativ kann das Aufzeichnungsgerät zur lösbaren Befestigung an der Führvorrichtung ausgebildet sein. Weiter zusätzlich oder alternativ kann die Benutzerführvorrichtung zu einer Berührung, insbesondere einem Greifen, durch den Benutzer, insbesondere durch seine Hand, ausgebildet sein. Weiter zusätzlich oder alternativ kann die Benutzerführvorrichtung eine, insbesondere die, Benutzertragevorrichtung sein. Die Benutzertragevorrichtung kann zum Tragen der Führvorrichtung durch den Benutzer ausgebildet sein. Insbesondere kann die Benutzertragevorrichtung ganz oder teilweise ausgebildet sein, wie zuvor beschrieben. Weiter zusätzlich oder alternativ kann die Führvorrichtung ein Führgerät sein, insbesondere ein Stab. Insbesondere kann das Führgerät ein Grünflächenbearbeitungsgerät sein, insbesondere ein Freischneider und/oder ein Grastrimmer und/oder ein Rasentrimmer und/oder ein Grasschneider und/oder ein Rasenschneider und/oder eine Grasschere und/oder eine Rasenschere. Das Grünflächenbearbeitungssystem kann ermöglichen einen, insbesondere den, Bereich der zu bearbeitenden Fläche, insbesondere einen, insbesondere den, Randbereich und/oder Kantenbereich, oder die zu bearbeitende Fläche vollständig mittels des Grünflächenbearbeitungsgeräts zu bearbeiten.

In einer Ausgestaltung der Erfindung ist die Führvorrichtung eine Motorsense. Insbesondere kann die Motorsense ganz oder teilweise ausgebildet sein, wie zuvor beschrieben. Bei Befestigung an der Motorsense kann das Randerfassungsgerät, insbesondere das Positionsbestimmungsgerät, als Sensenranderfassungsgerät, insbesondere als, insbesondere das, Sensenpositionsbestimmungsgerät, bezeichnet werden oder sein. Zusätzlich oder alternativ können bei Befestigung des Randerfassungsgeräts an der Motorsense die positionsbezogenen Daten, insbesondere die Positionskoordinaten, als Sensendaten, insbesondere als, insbesondere die, Sensenpositionskoordinaten, bezeichnet werden oder sein. Weiter zusätzlich oder alternativ kann die Befestigung des Randerfassungsgeräts beziehungsweise der Befestigungsbereich im Bereich des Schneidwerkzeugs, soweit vorhanden, sein.

In einer Weiterbildung der Erfindung weist das Grünflächenbearbeitungssystem eine Aufzeichnungs- und/oder Steuerungsauslöseeinrichtung auf. Die Aufzeichnungs- und/oder Steuerungsauslöseeinrichtung ist zur Aktivierung und/oder zur Deaktivierung des Aufzeichnens, insbesondere mittels des Aufzeichnungsgeräts, ausgebildet. Zusätzlich oder alternativ ist die Aufzeichnungs- und/oder Steuerungsauslöseeinrichtung zur Aktivierung und/oder zur Deaktivierung des Steuerns, insbesondere mittels der Steuereinheit, ausgebildet. Insbesondere kann die Aufzeichnungs- und/oder Steuerungsauslöseeinrichtung ein benutzerbetätigbares Bedienelement, insbesondere eine Taste, umfassen. Zusätzlich oder alternativ kann die Aufzeichnungs- und/oder Steuerungsauslöseeinrichtung an dem Grünflächenbearbeitungsroboter, dem Randerfassungsgerät, dem Aufzeichnungsgerät, der Steuereinheit oder, insbesondere räumlich, getrennt ausgebildet sein. Insbesondere kann die Aufzeichnungs- und/oder Steuerungsauslöseeinrichtung eine Smartwatch oder ein Smartphone oder ein Tablet oder ein Laptop oder ein Computer sein. Weiter zusätzlich oder alternativ kann die Aufzeichnungs- und/oder Steuerungsauslöseeinrichtung an der Führvorrichtung, soweit vorhanden, insbesondere ihrer Benutzerführvorrichtung, angeordnet sein. Insbesondere kann das Führgerät, insbesondere das Grünflächenbearbeitungsgerät, insbesondere die Motorsense, soweit vorhanden, einen Motor, insbesondere einen Antriebsmotor, und/oder ein bewegliches Werkzeug aufweisen, insbesondere ein Bearbeitungswerkzeug, insbesondere ein, insbesondere das, Schneidwerkzeug. Die Aufzeichnungs- und/oder Steuerungsauslöseeinrichtung kann zur Erkennung eines Betriebszustands des Antriebsmotors und/oder einer Bewegung des Werkzeugs und, insbesondere in Folge dessen, zur Aktivierung des Aufzeichnens ausgebildet sein. Zusätzlich oder alternativ kann die Aufzeichnungs- und/oder Steuerungsauslöseeinrichtung zur Erkennung eines Nicht-Betriebszustands des Antriebsmotors und/oder einer Nicht-Bewegung des Werkzeugs und, insbesondere in Folge dessen, zur Deaktivierung des Aufzeichnens ausgebildet sein. Weiter zusätzlich oder alternativ kann die Aufzeichnungs- und/oder Steuerungsauslöseeinrichtung zum Zusammenwirken mit dem Aufzeichnungsgerät und/oder der Steuereinheit ausgebildet sein.

In einer Ausgestaltung der Erfindung ist die Aufzeichnungs- und/oder Steuerungsauslöseeinrichtung zur Erkennung einer Lösung des Randerfassungsgeräts von dem Grünflächenbearbeitungsroboter und, insbesondere in Folge dessen, zur Deaktivierung des Steuerns ausgebildet. Zusätzlich oder alternativ ist die Aufzeichnungs- und/oder Steuerungsauslöseeinrichtung zur Erkennung einer Befestigung des Randerfassungsgeräts an der Führvorrichtung, soweit vorhanden, insbesondere im Befestigungsbereich, und, insbesondere in Folge dessen, zur Aktivierung des Aufzeichnens ausgebildet. Zusätzlich oder alternativ ist die Aufzeichnungs- und/oder Steuerungsauslöseeinrichtung zur Erkennung einer Lösung des Randerfassungsgeräts von der Führvorrichtung, soweit vorhanden, insbesondere vom Befestigungsbereich, und, insbesondere in Folge dessen, zur Deaktivierung des Aufzeichnens ausgebildet. Zusätzlich oder alternativ ist die Aufzeichnungs- und/oder Steuerungsauslöseeinrichtung zur Erkennung einer Befestigung des Randerfassungsgeräts an dem Grünflächenbearbeitungsroboter und, insbesondere in Folge dessen, zur Aktivierung des Steuerns ausgebildet. Dies ermöglicht eine selbstständige beziehungsweise automatische Aktivierung und/oder eine selbstständige beziehungsweise automatische Deaktivierung, insbesondere ohne den Benutzer beziehungsweise ohne Benutzerbetätigung.

In einer Weiterbildung der Erfindung weist das Grünflächenbearbeitungssystem ein Ausgabegerät, insbesondere eine Anzeige, insbesondere ein Display, und ein, insbesondere benutzerbetätigbares, Eingabegerät auf, insbesondere eine Tastatur und/oder eine Maus. Das Ausgabegerät ist zur Ausgabe der aufgezeichneten Abfolge von Randdaten und/oder einer, insbesondere der, Abfolge von auf der aufgezeichneten Abfolge von Randdaten basierenden Daten ausgebildet, insbesondere an den Benutzer. Das Eingabegerät ist zur Bearbeitung der aufgezeichneten Abfolge von Randdaten und/oder einer, insbesondere der, Abfolge von auf der aufgezeichneten Abfolge von Randdaten basierenden Daten ausgebildet, insbesondere durch den Benutzer. Insbesondere kann die Bearbeitung eine Editierung, eine Änderung, eine Verschiebung und/oder eine Glättung umfassen. Zusätzlich oder alternativ können das Ausgabegerät und das Eingabegerät ein kombiniertes Ausgabe-/Eingabegerät sein, insbesondere eine Smartwatch oder ein Smartphone oder ein Tablet oder ein Laptop oder ein Computer, insbesondere mit einem Touchscreen.

In einer Weiterbildung der Erfindung umfasst das Randerfassungsgerät eine Erfassungsübertragungseinheit zur Übertragung, insbesondere zur kabellosen oder kabelgebundenen Übertragung, von den erfassten positionsbezogenen Daten. Zusätzlich oder alternativ umfasst das Aufzeichnungsgerät eine Aufzeichnungsübertragungseinheit zur Übertragung, insbesondere zur kabellosen oder kabelgebundenen Übertragung, von den mittels des Randerfassungsgeräts erfassten Randdaten und/oder der aufgezeichneten Abfolge von Randdaten. Weiter zusätzlich oder alternativ umfasst die Steuereinheit eine Steuerübertragungseinheit zur Übertragung, insbesondere zur kabellosen oder kabelgebundenen Übertragung, von den mittels des Randerfassungsgeräts erfassten Roboterdaten und/oder von der aufgezeichneten Abfolge von Randdaten und/oder von einer, insbesondere der, Abfolge von auf der aufgezeichneten Abfolge von Randdaten basierenden Daten. Insbesondere kann die Erfassungsübertragungseinheit zum Zusammenwirken mit der Aufzeichnungsübertragungseinheit und/oder der Steuerübertragungseinheit ausgebildet sein. Zusätzlich oder alternativ kann die Aufzeichnungsübertragungseinheit zum Zusammenwirken mit der Steuerübertragungseinheit ausgebildet sein. Weiter zusätzlich oder alternativ kann das Ausgabegerät eine Ausgabeübertragungseinheit zur Übertragung, insbesondere zur kabellosen oder kabelgebundenen Übertragung, von der aufgezeichneten Abfolge von Randdaten und/oder von einer, insbesondere der, Abfolge von auf der aufgezeichneten Abfolge von Randdaten basierenden Daten umfassen. Weiter zusätzlich oder alternativ kann das Eingabegerät eine Eingabeübertragungseinheit zur Übertragung, insbesondere zur kabellosen oder kabelgebundenen Übertragung, von der aufgezeichneten Abfolge von Randdaten und/oder von einer, insbesondere der, Abfolge von auf der aufgezeichneten Abfolge von Randdaten basierenden Daten umfassen.

In einer Weiterbildung der Erfindung ist der autonome mobile Grünflächenbearbeitungsroboter als ein Rasenmähroboter mit einem Rasenmähwerkzeug ausgebildet. Insbesondere kann der Rasenmähroboter ganz oder teilweise ausgebildet sein, wie zuvor beschrieben.

Weiter bezieht sich die Erfindung auf ein Verfahren zum Erfassen mindestens eines Abschnitts eines Begrenzungsrands einer zu bearbeitenden Fläche mittels eines, insbesondere des zuvor beschriebenen, Grünflächenbearbeitungssystems. Das Grünflächenbearbeitungssystem weist einen, insbesondere den, autonomen mobilen Grünflächenbearbeitungsroboter, ein, insbesondere das, Randerfassungsgerät zur Erfassung von positionsbezogenen Daten des Begrenzungsrands und ein, insbesondere das, Aufzeichnungsgerät auf. Das Randerfassungsgerät ist zur lösbaren Befestigung an dem Grünflächenbearbeitungsroboter ausgebildet. Das Aufzeichnungsgerät ist dazu ausgebildet, eine, insbesondere die, Abfolge von mittels des Randerfassungsgeräts erfassten Randdaten des Begrenzungsrands aufzuzeichnen. Das erfindungsgemäße Verfahren weist die Schritte auf: a) Führen des von dem autonomen mobilen Grünflächenbearbeitungsroboter gelösten Randerfassungsgeräts entlang mindestens des Abschnitts des Begrenzungsrands der zu bearbeitenden Fläche, insbesondere durch den Benutzer, b) Erfassen von Randdaten mittels des Randerfassungsgeräts während des Führens. c) Aufzeichnen der Abfolge von Randdaten, insbesondere mindestens des Abschnitts, des Begrenzungsrands mittels des Aufzeichnungsgeräts. Das Randerfassungsgerät umfasst einen, insbesondere den, wiederaufladbaren Energiespeicher zur Versorgung des gelösten Randerfassungsgeräts mit Betriebsenergie. Der Grünflächenbearbeitungsroboter ist zur Wiederaufladung des Energiespeichers des befestigten Randerfassungsgeräts ausgebildet.

Das Verfahren kann die gleichen Vorteile ermöglichen wie das zuvor beschriebene Grünflächenbearbeitungssystem. Insbesondere kann das Verfahren alle oder einzelne Merkmale beziehungsweise Eigenschaften des Grünflächenbearbeitungssystems aufweisen. Zusätzlich oder alternativ kann das Grünflächenbearbeitungssystem ganz oder teilweise ausgebildet sein, wie zuvor beschrieben.

Insbesondere kann der Schritt c) zeitgleich mit den Schritten a) und b) ausgeführt werden und/oder zeitlich nach diesen. Zusätzlich oder alternativ kann zeitlich vor dem Schritt a) das Randerfassungsgerät von dem Grünflächenbearbeitungsroboter gelöst werden. Weiter zusätzlich oder alternativ kann zeitlich nach dem Schritt c) das Randerfassungsgerät an dem Grünflächenbearbeitungsroboter befestigt werden.

Zudem bezieht sich die Erfindung auf ein Verfahren zum Betreiben eines, insbesondere des, autonomen mobilen Grünflächenbearbeitungsroboters eines, insbesondere des zuvor beschriebenen, Grünflächenbearbeitungssystems auf einer, insbesondere der, zu bearbeitenden Fläche mit einem, insbesondere dem, Begrenzungsrand. Das erfindungsgemäße Verfahren umfasst das zuvor beschriebene Verfahren zum Erfassen mindestens eines, insbesondere des, Abschnitts des Begrenzungsrands. Das Grünflächenbearbeitungssystem weist eine, insbesondere die, Steuereinheit auf. Die Steuereinheit ist dazu ausgebildet, während das Randerfassungsgerät an dem Grünflächenbearbeitungsroboter befestigt ist, eine, insbesondere die, Bewegung des Grünflächenbearbeitungsroboters auf der zu bearbeitenden Fläche in Abhängigkeit von, insbesondere mittels des Randerfassungsgeräts erfassten, Roboterdaten und von der aufgezeichneten Abfolge von Randdaten derart zu steuern, dass der Grünflächenbearbeitungsroboter auf der zu bearbeitenden Fläche bleibt, insbesondere innerhalb des Begrenzungsrands. Des Weiteren weist das Verfahren den Schritt auf: Steuern einer, insbesondere der, Bewegung des Grünflächenbearbeitungsroboters, insbesondere zusammen, mit dem am Grünflächenbearbeitungsroboter befestigten Randerfassungsgerät auf der zu bearbeitenden Fläche in Abhängigkeit von, insbesondere mittels des Randerfassungsgeräts erfassten, Roboterdaten und von der aufgezeichneten Abfolge von Randdaten derart, dass der Grünflächenbearbeitungsroboter auf der zu bearbeitenden Fläche bleibt, insbesondere innerhalb des Begrenzungsrands, insbesondere mittels der Steuereinheit.

Das Verfahren kann die gleichen Vorteile ermöglichen wie das zuvor beschriebene Grünflächenbearbeitungssystem. Insbesondere kann das Verfahren alle oder einzelne Merkmale beziehungsweise Eigenschaften des Grünflächenbearbeitungssystems aufweisen. Zusätzlich oder alternativ kann das Grünflächenbearbeitungssystem ganz oder teilweise ausgebildet sein, wie zuvor beschrieben.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht eines erfindungsgemäßen Grünflächenbearbeitungssystems,
- Fig. 2: eine schematische Ansicht eines erfindungsgemäßen autonomen mobilen Grünflächenbearbeitungsroboters des Grünflächenbearbeitungssystems,
- Fig. 3: eine Draufsicht auf eine mittels des Grünflächenbearbeitungssystems der Fig. 1 und des Grünflächenbearbeitungsroboters der Fig. 2 zu bearbeitenden Fläche,
- Fig. 4: ein Ablaufdiagramm eines erfindungsgemäßen Verfahrens,
- Fig. 5: eine weitere schematische Ansicht des Grünflächenbearbeitungsroboters der Fig. 2,
- Fig. 6: ein Bild eines Begrenzungsrands der Fläche der Fig. 3,
- Fig. 7: eine schematische Ansicht einer Führvorrichtung in Form eines Führstabs des Grünflächenbearbeitungssystems,
- Fig. 8: eine schematische Ansicht einer Führvorrichtung in Form einer Motorsense des Grünflächenbearbeitungssystems, und
- Fig. 9: eine schematische Ansicht eines Aus- und/oder Eingabegeräts des Grünflächenbearbeitungssystems.

### DETAILLIERTE BESCHREIBUNG DER AUSFÜHRUNGSBEISPIELE

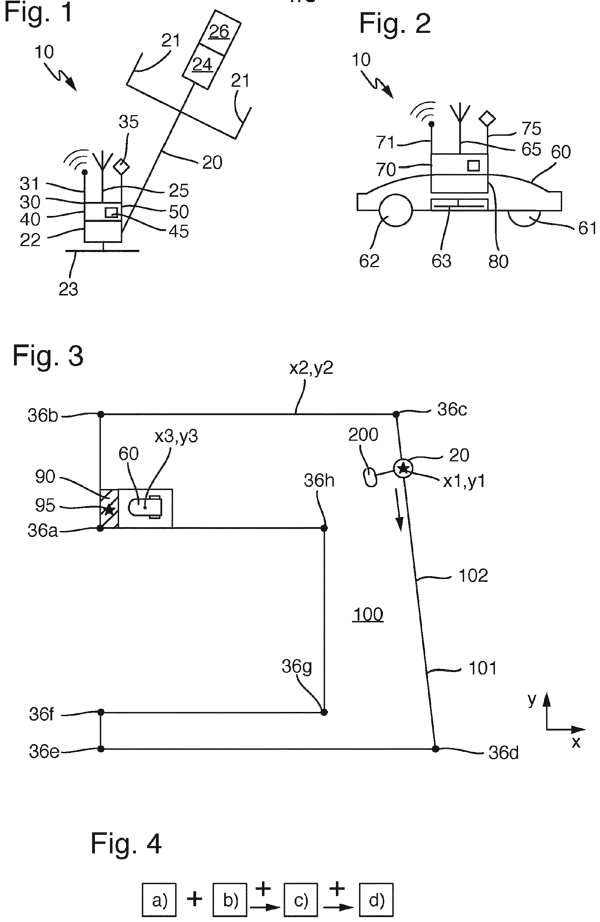

Fig. 1 bis Fig. 3 zeigen ein erfindungsgemäßes Grünflächenbearbeitungssystem 10. Das Grünflächenbearbeitungssystem 10 weist eine Motorsense 20, ein Sensenpositionsbestimmungsgerät 30 und einen Positionsaufzeichnungsgerät 40 auf. Das Sensenpositionsbestimmungsgerät 30 ist zur Bestimmung von Sensenpositionskoordinaten x1, y1 ausgebildet. Das Sensenpositionsbestimmungsgerät 30 ist an der Motorsense 20 befestigt. Das Positionsaufzeichnungsgerät 40 ist dazu ausgebildet, während die Motorsense 20 zusammen mit dem Sensenpositionsbestimmungsgerät 30 entlang mindestens eines Abschnitts 102 eines Begrenzungsrands 101 einer zur bearbeitenden Fläche 100 mit Rasen geführt wird, eine Abfolge von Sensenpositionskoordinaten x1, y1 des Begrenzungsrands 101 aufzuzeichnen, wie in Fig. 3 rechts oben zu erkennen. Im gezeigten Ausführungsbeispiel ist das Positionsaufzeichnungsgerät 40 an der Motorsense 20 befestigt, wie in Fig. 1 zu erkennen. In alternativen Ausführungsbeispielen kann das Positionsaufzeichnungsgerät woanders angeordnet sein, insbesondere braucht das Positionsaufzeichnungsgerät nicht an der Motorsense angeordnet sein. Das Positionsaufzeichnungsgerät 40 ist zum Zusammenwirken mit dem Sensenpositionsbestimmungsgerät 30 ausgebildet. Der Begrenzungsrand 101 begrenzt oder definiert die zu bearbeitende Fläche 100 in Form einer Wiese. Die Motorsense 20 des gezeigten Ausführungsbeispiels kann als Rasentrimmer bezeichnet werden.

Somit ermöglicht das Grünflächenbearbeitungssystem 10 ein Bearbeiten der Fläche 100, insbesondere am Begrenzungsrand 101 in Form eines Rasenrands, mittels der Motorsense 20. Zusätzlich ermöglicht das Grünflächenbearbeitungssystem 10 ein Erfassen mindestens des Abschnitts 102 des Begrenzungsrands 101 der Fläche 100 mittels des Sensenpositionsbestimmungsgeräts 30 und des Positionsaufzeichnungsgeräts 40.

Fig. 4 zeigt ein erfindungsgemäßes Verfahren zum Erfassen mindestens des Abschnitts 102 des Begrenzungsrands 101 der Fläche 100 mittels des zuvor beschriebenen Grünflächenbearbeitungssystems 10. In einem Schritt a) wird die Motorsense 20 entlang des Abschnitts 102, insbesondere durch einen Benutzer 200, geführt, wobei das Sensenpositionsbestimmungsgerät 30 an der Motorsense 20 befestigt ist. In einem Schritt b) werden Sensenpositionskoordinaten x1, y1 mittels des Sensenpositionsbestimmungsgeräts 30 während des Führens bestimmt. In einem Schritt c) wird die Abfolge von Sensenpositionskoordinaten x1, y1 mindestens des Abschnitts 102 des Begrenzungsrands 101 mittels des Positionsaufzeichnungsgeräts 40 aufgezeichnet.

Somit ermöglicht das Verfahren entsprechend ein Bearbeiten der Fläche 100 mittels der Motorsense 20. Zusätzlich ermöglicht das Verfahren entsprechend ein Erfassen mindestens des Abschnitts 102 des Begrenzungsrands 101 der Fläche 100 mittels des Sensenpositionsbestimmungsgeräts 30 und des Positionsaufzeichnungsgeräts 40.

Im Detail weist die Motorsense 20 eine Benutzertragevorrichtung 21 auf. Die Benutzertragevorrichtung 21 ist zum Tragen der Motorsense 20 durch den Benutzer 200 ausgebildet. Im gezeigten Ausführungsbeispiel umfasst die Benutzertragevorrichtung 21 eine Griffkonstruktion zum Halten.

Des Weiteren weist die Motorsense 20 einen Sensenkopf 22 mit einem Schneidwerkzeug 23 auf. Das Sensenpositionsbestimmungsgerät 30 ist im Bereich des Schneidwerkzeugs 23 befestigt, im gezeigten Ausführungsbeispiel am Sensenkopf 22. Des Weiteren ist das Positionsaufzeichnungsgerät 40 im Bereich des Schneidwerkzeugs 23 befestigt, insbesondere am Sensenkopf 22. Im Detail umfasst das Schneidwerkzeug 23 einen Mähfaden aus Nylon. Das Schneidwerkzeug 23 ist als ein rotierendes Schneidwerkzeug und dazu ausgebildet, die Fläche 100 beziehungsweise ihren Begrenzungsrand 101 im Freischnittverfahren zu mähen, insbesondere durch Zentrifugalkraft des Schneidwerkzeugs 23 einen Schneidvorgang zu erzeugen. Der Sensenkopf 22 des gezeigten Ausführungsbeispiels kann als Fadenkopf bezeichnet werden. Des Weiteren ist das Schneidwerkzeug 23 freiliegend beziehungsweise ungeschützt.

Außerdem weist die Motorsense 20 einen Motor 24 auf. Der Motor 24 ist zum Antrieb der Motorsense 20 beziehungsweise ihres Schneidwerkzeugs 23 ausgebildet. Der Motor kann ein Verbrennungsmotor, insbesondere ein Benzinmotor, oder ein Elektromotor sein. Weiter weist die Motorsense 20 eine Motor-Energiequelle 26 auf. Die Motor-Energiequelle kann ein Kraftstofftank, ein Akkumulator und/oder eine Brennstoffzelle sein.

Zusätzlich weist die Motorsense 20 eine nicht detailliert dargestellte Benutzerbedieneinheit auf, die zum Bedienen der Motorsense 20, insbesondere ihres Motors 24 oder ihres Schneidwerkzeugs 23, durch den Benutzer 200 ausgebildet ist. Die Benutzerbedieneinheit ist mit dem Schneidwerkzeug mittels eines, insbesondere verlängerten, Griffs oder Stabs mechanisch fest, insbesondere starr, verbunden.

Das Sensenpositionsbestimmungsgerät 30 umfasst im Detail einen Satelliten-Positionsbestimmungsempfänger 31 zur Bestimmung von Sensenpositionskoordinaten x1, y1. Im gezeigten Ausführungsbeispiel weist das Grünflächenbearbeitungssystem 10 einen weiteren Satelliten-Positionsbestimmungsempfänger 95 auf. Der weitere Satelliten-Positionsbestimmungsempfänger 95 ist stationär im Bereich der Fläche 100 angeordnet. Der Satelliten-Positionsbestimmungsempfänger 31 und der weitere Satelliten-Positionsbestimmungsempfänger 95 sind dazu ausgebildet, in Signalverbindung miteinander zu stehen, um eine relativ genaue Positionsbestimmung zu ermöglichen.

Zusätzlich umfasst das Sensenpositionsbestimmungsgerät 30 ein lokales Positionierungssystemgerät 35 zur Bestimmung von Sensenkoordinaten x1, y1. Im gezeigten Ausführungsbeispiel ist das lokale Positionierungssystemgerät 35 ein passives Element. Des Weiteren umfasst das Grünflächenbearbeitungssystem 10 aktive Elemente 36a, b, c, d, e, f, g, h, die in Ecken der Fläche 100 angeordnet sind. Das lokale Positionierungssystemgerät 35 und die aktiven Elemente 36a-h sind dazu ausgebildet, miteinander zusammenzuwirken, um eine Positionsbestimmung zu ermöglichen. In alternativen Ausführungsbeispielen kann es ausreichen, dass das Sensenpositionsbestimmungsgerät nur den Satelliten-Positionsbestimmungsempfänger oder nur das lokale Positionierungssystemgerät umfassen kann.

Weiter weist das Grünflächenbearbeitungssystem 10 eine Rechen- und Speichereinheit 50 auf. Die Rechen- und Speichereinheit 50 ist dazu ausgebildet, eine Abfolge von Begrenzungsrandkoordinaten x2, y2 mindestens des Abschnitts 102 des Begrenzungsrands 101 der zu bearbeitenden Fläche 100 basierend auf der aufgezeichneten Abfolge von Sensenpositionskoordination x1, y1 mindestens des Abschnitts 102 des Begrenzungsrands 101 zu bestimmten und zu speichern. Im gezeigten Ausführungsbeispiel ist die Rechen- und Speichereinheit 50 an der Motorsense 20 befestigt, insbesondere an dem Sensenkopf 22. In alternativen Ausführungsbeispielen kann die Rechen- und Speichereinheit woanders angeordnet sein, insbesondere braucht die Rechen- und Speichereinheit nicht an der Motorsense angeordnet sein. Die Rechen- und Speichereinheit 50 ist zum Zusammenwirken mit dem Positionsaufzeichnungsgerät 40 ausgebildet.

Entsprechend weist das Verfahren einen Schritt d) auf, in dem die Abfolge vom Begrenzungsrandkoordinaten x2, y2 mindestens des Abschnitts 102 des Begrenzungsrands 101 der zu bearbeitenden Fläche 100 basierend auf der aufgezeichneten Abfolge von Sensenpositionskoordinaten x1, y1 mindestens des Abschnitts 102 des Begrenzungsrands 101 mittels der Rechen- und Speichereinheit 50 bestimmt und gespeichert wird.

Zudem weist das Grünflächenbearbeitungssystem 10 eine Sensenübertagungseinheit 25 auf. Die Sensenübertragungseinheit 25 ist zum Zusammenwirken mit der Rechen- und Speichereinheit 50 und zur Datenübertragung, insbesondere zur drahtlosen Datenübertragung, der Abfolge von Begrenzungsrandkoordinaten x2, y2 ausgebildet. Im gezeigten Ausführungsbeispiel ist die Sensenübertragungseinheit 25 an der Motorsense 20 befestigt, insbesondere an dem Sensenkopf 22. In alternativen Ausführungsbeispielen kann die Sensenübertagungseinheit woanders angeordnet sein, insbesondere braucht die Sensenübertagungseinheit nicht an der Motorsense angeordnet sein.

Im gezeigten Ausführungsbeispiel sind das Sensenpositionsbestimmungsgerät 30, das Positionsaufzeichnungsgerät 40, die Rechen- und Speichereinheit 50 und die Sensenübertragungseinheit 25 als ein Bauteil miteinander ausgebildet. Dieses Bauteil ist portabel ausgebildet beziehungsweise zur lösbaren Befestigung an der Motorsense 20 ausgebildet, insbesondere an dem Sensenkopf 22. Des Weiteren weist das Bauteil eine Taste 45 auf. Die Taste 45 ist zur Aktivierung des Sensenpositionsbestimmungsgeräts 30, des Positionsaufzeichnungsgeräts 40 und der Rechen- und Speichereinheit 50 ausgebildet. Zusätzlich ist die Taste 45 zur Deaktivierung des Sensenpositionsbestimmungsgeräts 30, des Positionsaufzeichnungsgeräts 40 und der Rechen- und Speichereinheit 50 sowie zur zeitlich begrenzten Aktivierung der Sensenübertragungseinheit 25 ausgebildet.

Weiterhin weist das Grünflächenbearbeitungssystem 10 einen autonomen mobilen Grünflächenbearbeitungsroboter 60, ein Roboterpositionsbestimmungsgerät 70 und eine Steuereinheit 80 auf, wie in Fig. 2 zu erkennen. Das Roboterpositionsbestimmungsgerät 70 ist zur Bestimmung von Roboterpositionskoordinaten x3, y3 ausgebildet. Das Roboterpositionsbestimmungsgerät 70 ist an dem Grünflächenbearbeitungsroboter 60 befestigt. Die Steuereinheit 80 ist dazu ausgebildet, eine Bewegung des Grünflächenbearbeitungsroboters 60 auf der zu bearbeitenden Fläche 100 in Abhängigkeit von den bestimmten Roboterpositionskoordinaten x3, y3, und von der bestimmten und gespeicherten Abfolge von Begrenzungsrandkoordinaten x2, y2 mindestens des Abschnitts 102 des Begrenzungsrands 101 derart zu steuern, dass der Grünflächenbearbeitungsroboter 60 auf der Fläche 100 bleibt, insbesondere innerhalb des Begrenzungsrands 101. Im gezeigten Ausführungsbeispiel umfasst der Grünflächenbearbeitungsroboter 60 die Steuereinheit 80. Die Steuereinheit 80 ist zum Zusammenwirken mit dem Roboterpositionsbestimmungsgerät 70 ausgebildet.

Somit ermöglicht das Grünflächenbearbeitungssystem 10 ein autonomes Bearbeiten der Fläche 100 mittels des autonomen mobilen Grünflächenbearbeitungsroboters 60.

Im Detail ist der autonome mobile Grünflächenbearbeitungsroboter 60 als ein Rasenmähroboter mit einem Rasenmähwerkzeug 63 ausgebildet, insbesondere als ein Mulchmähroboter. Das Rasenmähwerkzeug 63 ist von dem Schneidwerkzeug 23 verschieden. Im gezeigten Ausführungsbeispiel umfasst das Rasenmähwerkzeug 63 ein Metallschneideblatt mit Schneidezähnen. Das Rasenmähwerkzeug 63 ist als ein rotierendes Rasenmähwerkzeug und dazu ausgebildet, die zu bearbeitende Fläche 100 im Freischnittverfahren zu mähen, insbesondere durch Zentrifugalkraft des Rasenmähwerkzeugs 63 einen Schneidvorgang zu erzeugen.

Außerdem weist der autonome mobile Grünflächenbearbeitungsroboter 60 vordere Laufräder 61, die schwenkbar sind, und hintere Laufräder 62 auf, die getrennt voneinander angetrieben sind. Somit kann sich der autonome mobile Grünflächenbearbeitungsroboter 60 auf der Fläche 100 selbstständig bewegen und lenken. Weiterhin weist der Grünflächenbearbeitungsroboter 60 einen nicht dargestellten Elektromotor zum Antrieb des Rasenmähwerkzeugs 63 auf. In alternativen Ausführungsbeispielen kann der Grünflächenbearbeitungsroboter einen Verbrennungsmotor, insbesondere einen Benzinmotor, zum Antrieb des Rasenmähwerkzeugs 63 aufweisen. Zudem weist der Grünflächenbearbeitungsroboter 60 einen nicht dargestellten Akkumulator zur Antriebsenergieversorgung der hinteren Laufräder 62 und des Elektromotors zum Antrieb des Rasenmähwerkzeugs 63 auf. In alternativen Ausführungsbeispielen kann der Grünflächenbearbeitungsroboter eine Brennstoffzelle oder eine andere Art einer Antriebsenergiequelle zur Antriebsenergieversorgung aufweisen.

Weiter weist das Grünflächenbearbeitungssystem 10 eine Basisstation 90 für den autonomen mobilen Grünflächenbearbeitungsroboter 60 auf, die hier an dem Begrenzungsrand 101 der Fläche 100 angeordnet ist, wie in Fig. 3 links oben zu erkennen. Im gezeigten Ausführungsbeispiel ist die Basisstation 90 als eine Ladestation zum Wiederaufladen, insbesondere zum automatischen, des Akkumulators des Grünflächenbearbeitungsroboters 60 ausgebildet.

Im Detail weist die Basisstation 90 den weiteren Satelliten-Positionsbestimmungsempfänger 95 auf. Das Roboterpositionsbestimmungsgerät 70 umfasst einen Roboter-Satelliten-Positionsbestimmungsempfänger 71 zur Bestimmung von Roboterpositionskoordinaten x3, y3. Der Roboter-Satelliten-Positionsbestimmungsempfänger 71 und der weitere Satelliten-Positionsbestimmungsempfänger 95 sind dazu ausgebildet, in Signalverbindung miteinander zu stehen, um eine relativ genaue Positionsbestimmung zu ermöglichen. Zusätzlich umfasst das Roboterpositionsbestimmungsgerät 70 ein Roboter-Lokales-Positionierungssystemgerät 75 zur Bestimmung von Roboterpositionskoordinaten x3, y3. Im gezeigten Ausführungsbeispiel ist das Roboter-Lokales-Positionierungssystemgerät 75 ein passives Element. Das Roboter-Lokales-Positionierungssystemgerät 75 und die aktiven Elemente 36a, h sind dazu ausgebildet, miteinander zusammenzuwirken, um eine Positionsbestimmung zu ermöglichen. In alternativen Ausführungsbeispielen kann es ausreichen, dass das Roboterpositionsbestimmungsgerät nur den Roboter-Satelliten-Positionsbestimmungsempfänger oder nur das Roboter-Lokales-Positionierungssystemgerät umfassen kann.

Zudem weist das Grünflächenbearbeitungssystem 10 eine Roboterübertragungseinheit 65 auf. Die Roboterübertragungseinheit 65 ist zum Zusammenwirken mit der Steuereinheit 80 und zur Datenübertragung, insbesondere zur drahtlosen Datenübertragung, der Abfolge von Begrenzungsrandkoordinaten x2, y2 ausgebildet. Die Sensenübertagungseinheit 25 und die Roboterübertragungseinheit 65 sind zur Datenübertragung von der Sensenübertragungseinheit 25 zu der Roboterübertragungseinheit 65 ausgebildet. Im gezeigten Ausführungsbeispiel ist die Roboterübertragungseinheit 65 an dem Grünflächenbearbeitungsroboter 60 befestigt. In alternativen Ausführungsbeispielen kann die Roboterübertragungseinheit woanders angeordnet sein, insbesondere braucht die Roboterübertragungseinheit nicht an dem Grünflächenbearbeitungsroboter angeordnet sein.

Im gezeigten Ausführungsbeispiel sind das Roboterpositionsbestimmungsgerät 70 und die Roboterübertragungseinheit 65 als ein Bauteil miteinander ausgebildet. Dieses Bauteil ist portabel ausgebildet beziehungsweise zur lösbaren Befestigung an dem Grünflächenbearbeitungsroboter 60 ausgebildet. Insbesondere ist dieses am Grünflächenbearbeitungsroboter 60 befestigte Bauteil baugleich dem an der Motorsense 20 befestigten Bauteil.

Vorliegend wird die Abfolge von Begrenzungsrandkoordinaten x2, y2 von der Sensenübertragungseinheit 25 zu der Roboterübertragungseinheit 65 übertragen. In alternativen Ausführungsbeispielen kann es ausreichen, dass das Grünflächenbearbeitungssystem nur ein portables Bauteil aufweisen kann. Dieses kann, insbesondere nach einem Erfassen mindestens des Abschnitts 102 des Begrenzungsrands 101 der zu bearbeitenden Fläche 100, von der Motorsense 20 gelöst werden und an dem autonomen mobilen Grünflächenbearbeitungsroboter 60 befestigt werden. Dabei kann das Sensenpositionsbestimmungsgerät das Roboterpositionsbestimmungsgerät bilden.

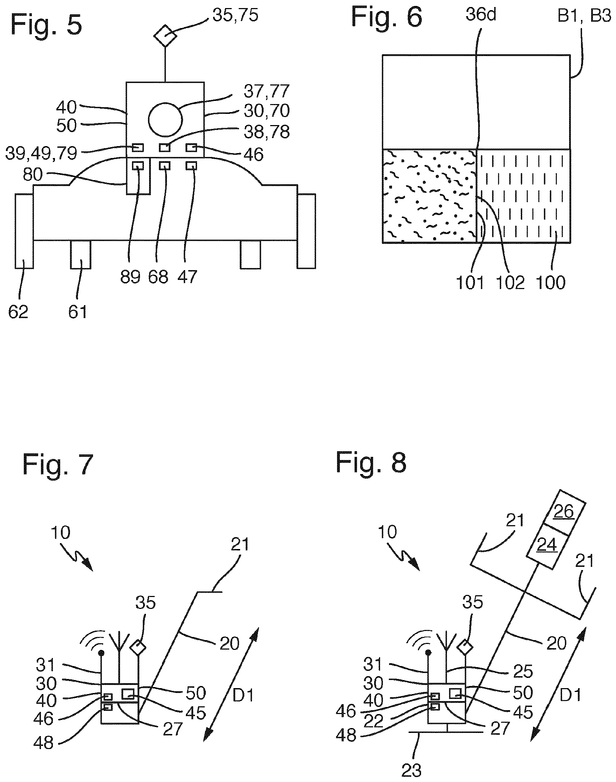

Des Weiteren zeigen Fig. 1 bis 3 und zusätzlich Fig. 5 und 7 bis 9 ein, insbesondere das, erfindungsgemäße Grünflächenbearbeitungssystem 10. Das Grünflächenbearbeitungssystem 10 weist einen, insbesondere den, autonomen mobilen Grünflächenbearbeitungsroboter 60, ein, insbesondere das, Randerfassungsgerät 30, 70, ein, insbesondere das, Aufzeichnungsgerät 40 und eine, insbesondere die, Steuereinheit 80 auf. Das Randerfassungsgerät 40 ist zur Erfassung von positionsbezogenen Daten x1, y1, x3, y3, B1, B3 mindestens des Abschnitts 102 des Begrenzungsrands 101 der zu bearbeitenden Fläche 102 ausgebildet. Außerdem ist das Randerfassungsgerät 30, 70 zur lösbaren Befestigung an dem Grünflächenbearbeitungsroboter 60 ausgebildet. Das Aufzeichnungsgerät 40 ist dazu ausgebildet, während das Randerfassungsgerät 30, 70 von dem Grünflächenbearbeitungsroboter 60 gelöst ist und entlang mindestens des Abschnitts 102 des Begrenzungsrands 101 geführt wird, eine, insbesondere die, Abfolge von mittels des Randerfassungsgeräts 30, 70 erfassten Randdaten x1, y1, B1 des Begrenzungsrands 101 aufzuzeichnen, wie in Fig. 3 rechts oben zu erkennen. Die Steuereinheit 80 ist dazu ausgebildet, während das Randerfassungsgerät 30, 70 an dem Grünflächenbearbeitungsroboter 60 befestigt ist, eine, insbesondere die, Bewegung des Grünflächenbearbeitungsroboters 60 auf der zu bearbeitenden Fläche 100 in Abhängigkeit von, insbesondere mittels des Randerfassungsgeräts 30, 70 erfassten, Roboterdaten x3, y3, B3 und von der aufgezeichneten Abfolge von Randdaten x1, y1, x2, y2, B1 derart zu steuern, dass der Grünflächenbearbeitungsroboter 60 auf der zu bearbeitenden Fläche 100 bleibt, insbesondere innerhalb des Begrenzungsrands 101. Im gezeigten Ausführungsbeispiel umfasst der Grünflächenbearbeitungsroboter 60 die Steuereinheit 80.

Somit kann das Grünflächenbearbeitungssystem 10 ein Auskommen mit dem, insbesondere einzigen, Randerfassungsgerät 30, 70 ermöglichen beziehungsweise das, insbesondere einzige, Randerfassungsgerät 30, 70 kann genügen.

Weiter zeigt Fig. 4 ein, insbesondere das, erfindungsgemäße Verfahren zum Erfassen mindestens des Abschnitts 102 des Begrenzungsrands 101 der Fläche 100 mittels eines, insbesondere des zuvor beschriebenen, Grünflächenbearbeitungssystems 10. In einem, insbesondere dem, Schritt a) wird das von dem Grünflächenbearbeitungsroboter 60 gelöste Randerfassungsgerät 30, 70 entlang mindestens des Abschnitts 102 des Begrenzungsrands 101 der Fläche 100, insbesondere durch den Benutzer, geführt. In einem, insbesondere dem, Schritt b) werden Randdaten x1, y1, B1 mittels des Randerfassungsgeräts 30, 70 während des Führens erfasst. In einem, insbesondere dem, Schritt c) wird die Abfolge von Randdaten x1, y1, B1 mindestens des Abschnitts 102 des Begrenzungsrands 101 mittels des Aufzeichnungsgeräts 40 aufgezeichnet.

Zudem umfasst ein erfindungsgemäßes Verfahren zum Betreiben eines, insbesondere des, Grünflächenbearbeitungsroboters 60 auf der Fläche 100 mit dem Begrenzungsrand 101 das zuvor beschriebene Verfahren zum Erfassen mindestens des Abschnitts 102 des Begrenzungsrands 101. Des Weiteren weist das Verfahren den Schritt auf: Steuern einer, insbesondere der, Bewegung des Grünflächenbearbeitungsroboters 60 zusammen mit dem am Grünflächenbearbeitungsroboter 60 befestigten Randerfassungsgerät 30, 70 auf der Fläche 100 in Abhängigkeit von, insbesondere mittels des Randerfassungsgeräts 30, 70 erfassten, Roboterdaten x3, y3, B3 und von der aufgezeichneten Abfolge von Randdaten x1, y1, x2, y2, B1 derart, dass der Grünflächenbearbeitungsroboter auf der Fläche 100 bleibt, insbesondere mittels der Steuereinheit 80.

Im Detail ist das Randerfassungsgerät 30, 70 portabel ausgebildet.

Außerdem ist das Aufzeichnungsgerät 40 portabel ausgebildet.

Weiter umfasst das Randerfassungsgerät 30, 70 ein, insbesondere das, Positionsbestimmungsgerät, insbesondere das Roboterpositionsbestimmungsgerät, zur Bestimmung von Positionskoordinaten x1, y1, x3, y3. Das Aufzeichnungsgerät 40, insbesondere das Positionsaufzeichnungsgerät, ist dazu ausgebildet, eine, insbesondere die, Abfolge von mittels des Positionsbestimmungsgeräts 30, 70 bestimmten Randpositionskoordinaten x1, y1 mindestens des Abschnitts 102 des Begrenzungsrands 101 aufzuzeichnen. Die Steuereinheit 80 ist dazu ausgebildet, die Bewegung des Grünflächenbearbeitungsroboters 60 auf der Fläche 100 in Abhängigkeit, insbesondere von mittels des Positionsbestimmungsgeräts 30, 70 bestimmten Roboterpositionskoordinaten x3, y3 und, von der aufgezeichneten Abfolge von Randpositionskoordinaten x1, y1, x2, y2 derart zu steuern, dass der Grünflächenbearbeitungsroboter 60 auf der Fläche 100 bleibt.

Im Detail umfasst das Positionsbestimmungsgerät 30, 70 einen, insbesondere den, Satelliten-Positionsbestimmungsempfänger 31, 71, insbesondere den Roboter-Satelliten-Positionsbestimmungsempfänger, zur Bestimmung von Positionskoordinaten x1, y1, x3, y3. Zusätzlich umfasst das Positionsbestimmungsgerät 30, 70 ein, insbesondere das, lokale Positionierungssystemgerät 35, 75, insbesondere das Roboter-Lokales-Positionierungssystemgerät, zur Bestimmung von Positionskoordinaten x1, y1, x3, y3. In alternativen Ausführungsbeispielen kann es ausreichen, dass das Positionsbestimmungsgerät nur den Satelliten-Positionsbestimmungsempfänger oder nur das lokale Positionierungssystemgerät umfassen kann.

Zudem umfasst das Randerfassungsgerät 30, 70 eine Kamera 37, 77 zur Aufnahme von Bildern B1, B3 mindestens des Abschnitts 102 des Begrenzungsrands 101 der Fläche 100, wie in Fig. 5 und 6 zu erkennen. Das Aufzeichnungsgerät 40 ist dazu ausgebildet, eine Abfolge von mittels der Kamera aufgenommenen Randbildern B1 mindestens des Abschnitts 102 des Begrenzungsrands 101 aufzuzeichnen. Die Steuereinheit 80 ist dazu ausgebildet, die Bewegung des Grünflächenbearbeitungsroboters 60 auf der Fläche 100 in Abhängigkeit, insbesondere von mittels der Kamera aufgenommenen Roboterbildern B3 und, von der aufgezeichneten Abfolge von Randbildern B1 derart zu steuern, dass der Grünflächenbearbeitungsroboter 60 auf der Fläche 100 bleibt. In alternativen Ausführungsbeispielen kann es ausreichen, dass das Randerfassungsgerät nur das Positionsbestimmungsgerät oder nur die Kamera umfassen kann.

Des Weiteren weist das Grünflächenbearbeitungssystem 10, insbesondere mindestens, eine Führvorrichtung 20 auf, in Fig. 7 ein Führgerät in Form eines Stabs und in Fig. 8 die Motorsense. Die Führvorrichtung 20 weist eine Benutzerführvorrichtung 21 auf, insbesondere die Benutzertragevorrichtung. Die Benutzerführvorrichtung 21 ist zum Führen der Führvorrichtung 20 durch den Benutzer 200 ausgebildet. Des Weiteren weist die Führvorrichtung 20 einen von der Benutzerführvorrichtung 21 mit einem Abstand D1 angeordneten Befestigungsbereich 27 auf. Das Randerfassungsgerät 30, 70 ist zur lösbaren Befestigung an der Führvorrichtung 20 im Befestigungsbereich 27 ausgebildet.

Außerdem weist das Grünflächenbearbeitungssystem 10 eine, insbesondere die, Aufzeichnungs- und/oder Steuerungsauslöseeinrichtung 45, 46 auf. Die Aufzeichnungs- und/oder Steuerungsauslöseeinrichtung 45, 46 ist zur Aktivierung und/oder zur Deaktivierung des Aufzeichnens, insbesondere mittels des Aufzeichnungsgeräts 40, und/oder des Steuerns, insbesondere mittels der Steuereinheit 80, ausgebildet.

Im Detail umfasst die Aufzeichnungsauslöseeinrichtung ein, insbesondere das, benutzerbetätigbare Bedienelement, insbesondere eine, insbesondere die Taste 45.

Weiter ist die Aufzeichnungs- und/oder Steuerungsauslöseeinrichtung 46 zur Erkennung einer Lösung des Randerfassungsgeräts 30, 70 von dem Grünflächenbearbeitungsroboter 60 und zur Deaktivierung des Steuerns ausgebildet, wie in Fig. 5 zu erkennen. Zusätzlich oder alternativ ist die Aufzeichnungs- und/oder Steuerungsauslöseeinrichtung 46 zur Erkennung einer Befestigung des Randerfassungsgeräts 30, 70 an der Führvorrichtung 20 und zur Aktivierung des Aufzeichnens ausgebildet, wie in Fig. 7 und 8 zu erkennen. Zusätzlich oder alternativ ist die Aufzeichnungs- und/oder Steuerungsauslöseeinrichtung 46 zur Erkennung einer Lösung des Randerfassungsgeräts 30, 70 von der Führvorrichtung 20 und zur Deaktivierung des Aufzeichnens ausgebildet. Zusätzlich oder alternativ ist die Aufzeichnungs- und/oder Steuerungsauslöseeinrichtung 46 zur Erkennung einer Befestigung des Randerfassungsgeräts 30, 70 an dem Grünflächenbearbeitungsroboter 60 und zur Aktivierung des Steuerns ausgebildet. In alternativen Ausführungsbeispielen kann es ausreichen, dass die Aufzeichnungsauslöseeinrichtung nur das benutzerbetätigbare Bedienelement umfassen kann oder nur zur Erkennung ausgebildet sein kann.

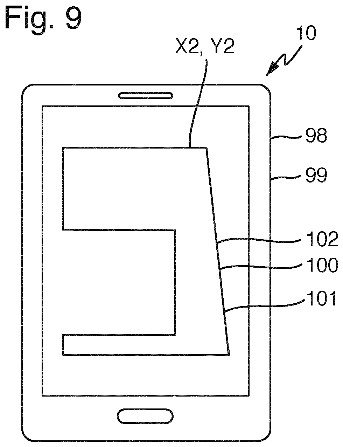

Zudem weist das Grünflächenbearbeitungssystem 10 ein Ausgabegerät 98 und ein Eingabegerät 99 auf, wie in Fig. 9 zu erkennen. Das Ausgabegerät 98 ist zur Ausgabe der aufgezeichneten Abfolge von Randdaten x1, y1, B1 und/oder einer, insbesondere der, Abfolge von auf der aufgezeichneten Abfolge von Randdaten basierenden Daten x2, y2 ausgebildet. Das Eingabegerät 99 ist zur Bearbeitung der aufgezeichneten Abfolge von Randdaten x1, y1, B1 und/oder einer, insbesondere der, Abfolge von auf der aufgezeichneten Abfolge von Randdaten basierenden Daten x2, y2 ausgebildet. In alternativen Ausführungsbeispielen kann es ausreichen, dass das Grünflächenbearbeitungssystem nur die Rechen- und Speichereinheit oder nur das Ausgabegerät und das Eingabegerät aufweisen kann. Im gezeigten Ausführungsbeispiel sind das Ausgabegerät 98 und das Eingabegerät 99 ein kombiniertes Ausgabe-/Eingabegerät, insbesondere ein Smartphone, insbesondere mit einem Touchscreen.

Des Weiteren umfasst das Randerfassungsgerät 30, 70 eine Erfassungsübertragungseinheit 39, 79 zur Übertragung, insbesondere zur kabellosen Übertragung, von den erfassten positionsbezogenen Daten x1, y1, x3, y3, B1, B3. Zusätzlich oder alternativ umfasst das Aufzeichnungsgerät 40 eine Aufzeichnungsübertragungseinheit 49 zur Übertragung, insbesondere zur kabellosen Übertragung, von den mittels des Randerfassungsgeräts erfassten Randdaten x1, y1, B1 und/oder der aufgezeichneten Abfolge von Randdaten x1, y1, B1. Weiter zusätzlich oder alternativ umfasst die Steuereinheit 80 eine Steuerübertragungseinheit 89 zur Übertragung, insbesondere zur kabellosen Übertragung, von den mittels des Randerfassungsgeräts erfassten Roboterdaten x3, y3, B3 und/oder von der aufgezeichneten Abfolge von Randdaten x1, y1, B1 und/oder von einer, insbesondere der, Abfolge von auf der aufgezeichneten Abfolge von Randdaten basierenden Daten x2, y2.

Außerdem umfasst das Randerfassungsgerät 30, 70 einen wiederaufladbaren Energiespeicher 38, 78, insbesondere einen Akkumulator, zur Versorgung des gelösten Randerfassungsgeräts 30, 70 mit Betriebsenergie, insbesondere elektrischer Betriebsenergie. Insbesondere ist der Grünflächenbearbeitungsroboter 60 zur Wiederaufladung, insbesondere zur induktiven Wiederaufladung, des Energiespeichers 38, 78 des befestigten Randerfassungsgeräts 30, 70 ausgebildet. Im gezeigten Ausführungsbeispiel umfasst der Grünflächenbearbeitungsroboter 60 eine, insbesondere induktive, Ladeeinheit 68 zur, insbesondere induktiven, Wiederaufladung des Energiespeichers 38, 78.

Im Detail ist der autonome mobile Grünflächenbearbeitungsroboter 60 als ein, insbesondere der, Rasenmähroboter mit einem, insbesondere dem, Rasenmähwerkzeug 63 ausgebildet.

Im gezeigten Ausführungsbeispiel sind das Randerfassungsgerät 30, 70 und das Aufzeichnungsgerät 40 als ein Bauteil miteinander ausgebildet. Dieses Bauteil ist zur lösbaren Befestigung an dem Grünflächenbearbeitungsroboter 60 ausgebildet, insbesondere portabel ausgebildet. In Fig. 5 ist das Randerfassungsgerät 30, 70 beziehungsweise das Bauteil an dem Grünflächenbearbeitungsroboter 60 befestigt. Zusätzlich ist dieses Bauteil zur lösbaren Befestigung an der Führvorrichtung 20, insbesondere dem Führstab und/oder der Motorsense, im Befestigungsbereich 27 ausgebildet. In Fig. 7 und 8 ist das Randerfassungsgerät 30, 70 beziehungsweise das Bauteil an der Führvorrichtung 20, insbesondere dem Führstab oder der Motorsense, im Befestigungsbereich 27 befestigt. Des Weiteren weist im gezeigten Ausführungsbeispiel dieses Bauteil die Rechen- und Speichereinheit 50 auf. Außerdem weist im gezeigten Ausführungsbeispiel dieses Bauteil die Aufzeichnungs- und/oder Steuerungsauslöseeinrichtung 45, 46 auf.

Zusätzlich weist im gezeigten Ausführungsbeispiel der Grünflächenbearbeitungsroboter 60 ein Roboter-Erkennungselement 47 auf und/oder die Führvorrichtung 20 beziehungsweise der Führstab und/oder die Motorsense weist/weisen, insbesondere im Befestigungsbereich 27, ein, insbesondere jeweiliges, Führ-Erkennungselement 48 auf. Im Detail ist die Aufzeichnungs- und/oder Steuerungsauslöseeinrichtung 46 zur, insbesondere berührungslosen, Erkennung des Roboter-Erkennungselements 47 und/oder des Führ-Erkennungselements 48, insbesondere zur Unterscheidung zwischen dem Roboter-Erkennungselement 47 und dem Führ-Erkennungselement 48, ausgebildet. Im gezeigten Ausführungsbeispiel umfasst die Aufzeichnungs- und/oder Steuerungsauslöseeinrichtung 46 einen Magnetfeldsensor, insbesondere einen Hall-Sensor, und das, insbesondere jeweilige, Erkennungselement 47, 48 ist ein magnetisches Erkennungselement, insbesondere ein Permanentmagnet. Im Detail ist ein Magnetfeld des Roboter-Erkennungselements 47 mit einem magnetischen Nordpol in Fig. 5 nach oben und einem magnetischen Südpol nach unten ausgerichtet. Ein Magnetfeld des Führ-Erkennungselements 48 ist mit einem magnetischen Nordpol in Fig. 7 und 8 nach unten und einem magnetischen Südpol nach oben ausgerichtet.

Weiter ist im gezeigten Ausführungsbeispiel die Erfassungsübertragungseinheit 39, 79 die Aufzeichnungsübertragungseinheit 49.

Weiter ist die Aufzeichnungs- und/oder Steuerungsauslöseeinrichtung 46 zum Zusammenwirken mit dem Aufzeichnungsgerät 40 und/oder der Steuereinheit 80 ausgebildet, insbesondere mittels der Erfassungsübertragungseinheit 39, 79, der Aufzeichnungsübertragungseinheit 49 und/oder der Steuerübertragungseinheit 89. Im gezeigten Ausführungsbeispiels ist dieses Bauteil beziehungsweise das Randerfassungsgerät 30, 70 beziehungsweise seine Erfassungsübertragungseinheit 39, 79 beziehungsweise das Aufzeichnungsgerät 40 beziehungsweise seine Aufzeichnungsübertragungseinheit 49 zur Übertragung von den erfassten positionsbezogenen Daten, insbesondere den Roboterdaten, x1, y1, x3, y3, B1, B3 und/oder der aufgezeichneten Abfolge von Randdaten x1, y1, B1 und/oder der Abfolge von auf der aufgezeichneten Abfolge von Randdaten basierenden Daten x2, y2 bei Befestigung am Grünflächenbearbeitungsroboter 60 und somit zur Aktivierung des Steuerns und zur Nicht- Übertragung bei Lösung von dem Grünflächenbearbeitungsroboter 60 und somit zur Deaktivierung des Steuerns ausgebildet. Die Steuereinheit 80 ist zum Steuern bei Übertragung von den erfassten positionsbezogenen Daten, insbesondere den Roboterdaten, x1, y1, x3, y3, B1, B3 und/oder der aufgezeichneten Abfolge von Randdaten x1, y1, B1 und/oder der Abfolge von auf der aufgezeichneten Abfolge von Randdaten basierenden Daten x2, y2 und zum Nicht-Steuern bei Nicht-Übertragung ausgebildet.

Wie die gezeigten und oben erläuterten Ausführungsbeispiele deutlich machen, stellt die Erfindung ein vorteilhaftes Grünflächenbearbeitungssystem, das verbesserte Eigenschaften aufweist, insbesondere mehr Funktionalitäten, sowie ein Verfahren zum Erfassen mindestens eines Abschnitts eines Begrenzungsrands einer zu bearbeitenden Fläche mittels eines, insbesondere solchen, Grünflächenbearbeitungssystems und ein Verfahren zum Betreiben eines autonomen mobilen Grünflächenbearbeitungsroboters eines, insbesondere solchen, Grünflächenbearbeitungssystems auf der Fläche bereit. Insbesondere ermöglichen das Grünflächenbearbeitungssystem und das Verfahren einen Bereich der zu bearbeitenden Fläche, insbesondere einen Randbereich und/oder Kantenbereich, oder die zu bearbeitende Fläche vollständig mittels der Motorsense zu bearbeiten und ein Erfassen, insbesondere des mindestens einen Abschnitts, des Begrenzungsrands der zu bearbeitenden Fläche mittels des Sensenpositionsbestimmungsgeräts und des Positionsaufzeichnungsgeräts. Des Weiteren können das Grünflächenbearbeitungssystem und das Verfahren ein Auskommen mit dem, insbesondere einzigen, Randerfassungsgerät ermöglichen beziehungsweise das, insbesondere einzige, Randerfassungsgerät kann genügen.

## Patentansprüche

1. Grünflächenbearbeitungssystem (10) aufweisend:
- einen autonomen mobilen Grünflächenbearbeitungsroboter (60),
- ein Randerfassungsgerät (30, 70) zur Erfassung von positionsbezogenen Daten (x1, y1, x3, y3, B1, B3) eines Begrenzungsrands (101) einer zu bearbeitenden Fläche (100), wobei das Randerfassungsgerät zur lösbaren Befestigung an dem Grünflächenbearbeitungsroboter ausgebildet ist,
- ein Aufzeichnungsgerät (40), wobei das Aufzeichnungsgerät dazu ausgebildet ist, während das Randerfassungsgerät von dem Grünflächenbearbeitungsroboter gelöst ist und entlang des Begrenzungsrands geführt wird, eine Abfolge von mittels des Randerfassungsgeräts erfassten Randdaten (x1, y1, B1) des Begrenzungsrands aufzuzeichnen, und
- eine Steuereinheit (80), wobei die Steuereinheit dazu ausgebildet ist, während das Randerfassungsgerät an dem Grünflächenbearbeitungsroboter befestigt ist, eine Bewegung des Grünflächenbearbeitungsroboters auf der zu bearbeitenden Fläche in Abhängigkeit von, insbesondere mittels des Randerfassungsgeräts erfassten, Roboterdaten (x3, y3, B3) und von der aufgezeichneten Abfolge von Randdaten (x1, y1, x2, y2, B1) derart zu steuern, dass der Grünflächenbearbeitungsroboter auf der zu bearbeitenden Fläche bleibt,
**dadurch gekennzeichnet,**
- **dass** das Randerfassungsgerät (30, 70) einen wiederaufladbaren Energiespeicher (38, 78) zur Versorgung des gelösten Randerfassungsgeräts mit Betriebsenergie umfasst, und
- **dass** der Grünflächenbearbeitungsroboter (60) zur Wiederaufladung des Energiespeichers des befestigten Randerfassungsgeräts ausgebildet ist.

2. Grünflächenbearbeitungssystem (10) nach Anspruch 1,
- wobei das Randerfassungsgerät (30, 70) portabel ausgebildet ist, und/oder
- wobei das Aufzeichnungsgerät (40) portabel ausgebildet ist.

3. Grünflächenbearbeitungssystem (10) nach einem der vorhergehenden Ansprüche,
- wobei das Randerfassungsgerät (30, 70) ein Positionsbestimmungsgerät zur Bestimmung von Positionskoordinaten (x1, y1, x3, y3) umfasst,
- wobei das Aufzeichnungsgerät (40) dazu ausgebildet ist, eine Abfolge von mittels des Positionsbestimmungsgeräts bestimmten Randpositionskoordinaten (x1, y1) des Begrenzungsrands (101) aufzuzeichnen, und
- wobei die Steuereinheit (80) dazu ausgebildet ist, die Bewegung des Grünflächenbearbeitungsroboters (60) auf der zu bearbeitenden Fläche (100) in Abhängigkeit, insbesondere von mittels des Positionsbestimmungsgeräts bestimmten Roboterpositionskoordinaten (x3, y3) und, von der aufgezeichneten Abfolge von Randpositionskoordinaten (x1, y1, x2, y2) derart zu steuern, dass der Grünflächenbearbeitungsroboter auf der zu bearbeitenden Fläche bleibt.

4. Grünflächenbearbeitungssystem (10) nach Anspruch 3,
- wobei das Positionsbestimmungsgerät (30, 70) einen Satelliten-Positionsbestimmungsempfänger (31, 71) zur Bestimmung von Positionskoordinaten (x1, y1, x3, y3) umfasst, und/oder
- wobei das Positionsbestimmungsgerät (30, 70) ein lokales Positionierungssystemgerät (35, 75) zur Bestimmung von Positionskoordinaten (x1, y1, x3, y3) umfasst.

5. Grünflächenbearbeitungssystem (10) nach einem der vorhergehenden Ansprüche,
- wobei das Randerfassungsgerät (30, 70) eine Kamera (37, 77) zur Aufnahme von Bildern (B1, B3) des Begrenzungsrands (101) umfasst,
- wobei das Aufzeichnungsgerät (40) dazu ausgebildet ist, eine Abfolge von mittels der Kamera aufgenommenen Randbildern (B1) des Begrenzungsrands (101) aufzuzeichnen, und
- wobei die Steuereinheit (80) dazu ausgebildet ist, die Bewegung des Grünflächenbearbeitungsroboters (60) auf der zu bearbeitenden Fläche (100) in Abhängigkeit, insbesondere von mittels der Kamera aufgenommenen Roboterbildern (B3) und, von der aufgezeichneten Abfolge von Randbildern (B1) derart zu steuern, dass der Grünflächenbearbeitungsroboter auf der zu bearbeitenden Fläche bleibt.

6. Grünflächenbearbeitungssystem (10) nach einem der vorhergehenden Ansprüche, aufweisend:
- eine Führvorrichtung (20) aufweisend eine Benutzerführvorrichtung (21), wobei die Benutzerführvorrichtung zum Führen der Führvorrichtung durch einen Benutzer (200) ausgebildet ist, und einen von der Benutzerführvorrichtung mit einem Abstand (D1) angeordneten Befestigungsbereich (27),
- wobei das Randerfassungsgerät (30, 70) zur lösbaren Befestigung an der Führvorrichtung im Befestigungsbereich ausgebildet ist.

7. Grünflächenbearbeitungssystem (10) nach Anspruch 6,
- wobei die Führvorrichtung (20) eine Motorsense ist.

8. Grünflächenbearbeitungssystem (10) nach einem der vorhergehenden Ansprüche, aufweisend:
- eine Aufzeichnungs- und/oder Steuerungsauslöseeinrichtung (45, 46), wobei die Aufzeichnungs- und/oder Steuerungsauslöseeinrichtung zur Aktivierung und/oder zur Deaktivierung des Aufzeichnens, insbesondere mittels des Aufzeichnungsgeräts (40), und/oder des Steuerns, insbesondere mittels der Steuereinheit (80), ausgebildet ist.

9. Grünflächenbearbeitungssystem (10) nach Anspruch 8,
- wobei die Aufzeichnungs- und/oder Steuerungsauslöseeinrichtung (46) zur Erkennung einer Lösung des Randerfassungsgeräts (30, 70) von dem Grünflächenbearbeitungsroboter (60) und zur Deaktivierung des Steuerns ausgebildet ist, und/oder
- wobei die Aufzeichnungs- und/oder Steuerungsauslöseeinrichtung zur Erkennung einer Befestigung des Randerfassungsgeräts an der Führvorrichtung (20) und zur Aktivierung des Aufzeichnens ausgebildet ist, und/oder
wobei die Aufzeichnungs- und/oder Steuerungsauslöseeinrichtung zur Erkennung einer Lösung des Randerfassungsgeräts von der Führvorrichtung und zur Deaktivierung des Aufzeichnens ausgebildet ist, und/oder
- wobei die Aufzeichnungs- und/oder Steuerungsauslöseeinrichtung zur Erkennung einer Befestigung des Randerfassungsgeräts an dem Grünflächenbearbeitungsroboter und zur Aktivierung des Steuerns ausgebildet ist.

10. Grünflächenbearbeitungssystem (10) nach einem der vorhergehenden Ansprüche, aufweisend:
- ein Ausgabegerät (98), wobei das Ausgabegerät zur Ausgabe der aufgezeichneten Abfolge von Randdaten (x1, y1, B1) und/oder einer Abfolge von auf der aufgezeichneten Abfolge von Randdaten basierenden Daten (x2, y2) ausgebildet ist, und
- ein Eingabegerät (99), wobei das Eingabegerät zur Bearbeitung der aufgezeichneten Abfolge von Randdaten (x1, y1, B1) und/oder einer Abfolge von auf der aufgezeichneten Abfolge von Randdaten basierenden Daten (x2, y2) ausgebildet ist.

11. Grünflächenbearbeitungssystem (10) nach einem der vorhergehenden Ansprüche,
- wobei das Randerfassungsgerät (30, 70) eine Erfassungsübertragungseinheit (39, 79) zur Übertragung von den erfassten positionsbezogenen Daten (x1, y1, x3, y3, B1, B3) umfasst, und/oder
- wobei das Aufzeichnungsgerät (40) eine Aufzeichnungsübertragungseinheit (49) zur Übertragung von den mittels des Randerfassungsgeräts erfassten Randdaten (x1, y1, B1) und/oder der aufgezeichneten Abfolge von Randdaten (x1, y1, B1) umfasst, und/oder
- wobei die Steuereinheit (80) eine Steuerübertragungseinheit (89) zur Übertragung von den mittels des Randerfassungsgeräts erfassten Roboterdaten (x3, y3, B3) und/oder von der aufgezeichneten Abfolge von Randdaten (x1, y1, B1) und/oder von einer Abfolge von auf der aufgezeichneten Abfolge von Randdaten basierenden Daten (x2, y2) umfasst.

12. Grünflächenbearbeitungssystem (10) nach einem der vorhergehenden Ansprüche,
- wobei der autonome mobile Grünflächenbearbeitungsroboter (60) als ein Rasenmähroboter mit einem Rasenmähwerkzeug (63) ausgebildet ist.

13. Verfahren zum Erfassen mindestens eines Abschnitts (102) eines Begrenzungsrands (101) einer zu bearbeitenden Fläche (100) mittels eines Grünflächenbearbeitungssystems (10), insbesondere nach einem der vorhergehenden Ansprüche, aufweisend einen autonomen mobilen Grünflächenbearbeitungsroboter (60), ein Randerfassungsgerät (30, 70) zur Erfassung von positionsbezogenen Daten (x1, y1, x3, y3, B1, B3) des Begrenzungsrands (101), wobei das Randerfassungsgerät zur lösbaren Befestigung an dem Grünflächenbearbeitungsroboter ausgebildet ist, und ein Aufzeichnungsgerät (40), wobei das Aufzeichnungsgerät dazu ausgebildet ist, eine Abfolge von mittels des Randerfassungsgeräts erfassten Randdaten (x1, y1, B1) des Begrenzungsrands aufzuzeichnen, wobei das Verfahren die Schritte aufweist:
a) Führen des von dem autonomen mobilen Grünflächenbearbeitungsroboter (60) gelösten Randerfassungsgeräts (30, 70) entlang mindestens des Abschnitts (102) des Begrenzungsrands (101) der zu bearbeitenden Fläche (100),
b) Erfassen von Randdaten (x1, y1, B1) mittels des Randerfassungsgeräts während des Führens, und
c) Aufzeichnen der Abfolge von Randdaten des Begrenzungsrands mittels des Aufzeichnungsgeräts (40),
**dadurch gekennzeichnet,**
- **dass** das Randerfassungsgerät (30, 70) einen wiederaufladbaren Energiespeicher (38, 78) zur Versorgung des gelösten Randerfassungsgeräts mit Betriebsenergie umfasst, und
- **dass** der Grünflächenbearbeitungsroboter (60) zur Wiederaufladung des Energiespeichers des befestigten Randerfassungsgeräts ausgebildet ist.

14. Verfahren zum Betreiben eines autonomen mobilen Grünflächenbearbeitungsroboters (60) eines Grünflächenbearbeitungssystems (10), insbesondere nach einem der Ansprüche 1 bis 12, auf einer zu bearbeitenden Fläche (100) mit einem Begrenzungsrand (101),
- wobei das Verfahren das Verfahren nach Anspruch 13 zum Erfassen mindestens eines Abschnitts (102) des Begrenzungsrands (101) umfasst,
- wobei das Grünflächenbearbeitungssystem (10) eine Steuereinheit (80) aufweist, wobei die Steuereinheit dazu ausgebildet ist, während das Randerfassungsgerät (30, 70 ) an dem Grünflächenbearbeitungsroboter befestigt ist, eine Bewegung des Grünflächenbearbeitungsroboters auf der zu bearbeitenden Fläche (100) in Abhängigkeit von, insbesondere mittels des Randerfassungsgeräts erfassten, Roboterdaten (x3, y3, B3) und von der aufgezeichneten Abfolge von Randdaten (x1, y1, x2, y2, B1) derart zu steuern, dass der Grünflächenbearbeitungsroboter auf der zu bearbeitenden Fläche bleibt, und
- wobei das Verfahren den Schritt aufweist:
Steuern einer Bewegung des Grünflächenbearbeitungsroboters (60) mit dem am Grünflächenbearbeitungsroboter befestigten Randerfassungsgerät (30, 70) auf der zu bearbeitenden Fläche (100) in Abhängigkeit von, insbesondere mittels des Randerfassungsgeräts erfassten, Roboterdaten (x3, y3, B3) und von der aufgezeichneten Abfolge von Randdaten (x1, y1, x2, y2, B1) derart, dass der Grünflächenbearbeitungsroboter auf der zu bearbeitenden Fläche bleibt.

## Claims

1. A green area maintenance system (10) having:
- an autonomous mobile green area maintenance robot (60),
- a border sensing device (30, 70) for sensing position-related data (x1, y1, x3, y3, B1, B3) of a delimiting border (101) of an area to be maintained (100), the border sensing device being designed for detachable attachment to the green area maintenance robot,
- a recording device (40), the recording device being designed for the purpose of recording a series of border data (x1, y1, B1) sensed by means of the border sensing device of the delimiting border while the border sensing device is detached from the green area maintenance robot and is being guided along the delimiting border, and
- a control unit (80), the control unit being designed for the purpose of controlling a movement of the green area maintenance robot on the area to be maintained in dependence on robot data (x3, y3, B3), in particular sensed by means of the border sensing device, and the recorded series of border data (x1, y1, x2, y2, B1) while the border sensing device is attached to the green area maintenance robot in such a way that the green area maintenance robot stays on the area to be maintained,
**characterized in**
- **that** the border sensing device (30, 70) comprises a rechargeable energy store (38, 78) for supplying the detached border sensing device with operating energy, and
- **that** the green area maintenance robot (60) is designed for the recharging of the energy store of the attached border sensing device.

2. The green area maintenance system (10) as claimed in claim 1,
- wherein the border sensing device (30, 70) is of a portable design, and/or
- wherein the recording device (40) is of a portable design.

3. The green area maintenance system (10) as claimed in one of the preceding claims,
- wherein the border sensing device (30, 70) comprises a position determining device for determining position coordinates (x1, y1, x3, y3),
- wherein the recording device (40) is designed for the purpose of recording a series of border position coordinates (x1, y1) determined by means of the position determining device of the delimiting border (101), and
- wherein the control unit (80) is designed for the purpose of controlling the movement of the green area maintenance robot (60) on the area to be maintained (100) in dependence in particular on robot position coordinates (x3, y3) determined by means of the position determining device and the recorded series of border position coordinates (x1, y1, x2, y2) in such a way that the green area maintenance robot stays on the area to be maintained.

4. The green area maintenance system (10) as claimed in claim 3,
- wherein the position determining device (30, 70) comprises a satellite position determining receiver (31, 71) for determining position coordinates (x1, y1, x3, y3), and/or
- wherein the position determining device (30, 70) comprises a local positioning system device (35, 75) for determining position coordinates (x1, y1, x3, y3).

5. The green area maintenance system (10) as claimed in one of the preceding claims,
- wherein the border sensing device (30, 70) comprises a camera (37, 77) for recording images (B1, B3) of the delimiting border (101),
- wherein the recording device (40) is designed for the purpose of recording a series of border images (B1) recorded by means of the camera of the delimiting border (101) and
- wherein the control unit (80) is designed for the purpose of controlling the movement of the green area maintenance robot (60) on the area to be maintained (100) in dependence on robot images (B3), in particular recorded by means of the camera, and the recorded series of border images (B1) in such a way that the green area maintenance robot stays on the area to be maintained.

6. The green area maintenance system (10) as claimed in one of the preceding claims, having:
- a guiding device (20) having a user guiding device (21), the user guiding device being designed for the guiding of the guiding device by a user (200), and an attaching region (27) arranged at a distance (D1) from the user guiding device,
- wherein the border sensing device (30, 70) is designed for detachable attachment to the guiding device in the attaching region.

7. The green area maintenance system (10) as claimed in claim 6,
- wherein the guiding device (20) is a motor scythe.

8. The green area maintenance system (10) as claimed in one of the preceding claims, having:
- a recording and/or control initiating device (45, 46), the recording and/or control initiating device being designed for activating and/or deactivating the recording, in particular by means of the recording device (40), and/or the control, in particular by means of the control unit (80).

9. The green area maintenance system (10) as claimed in claim 8,
- wherein the recording and/or control initiating device (46) is designed for detecting a detachment of the border sensing device (30, 70) from the green area maintenance robot (60) and for deactivating the control, and/or
- wherein the recording and/or control initiating device is designed for detecting an attachment of the border sensing device to the guiding device (20) and for activating the recording, and/or wherein the recording and/or control initiating device is designed for detecting a detachment of the border sensing device from the guiding device and for deactivating the recording, and/or
- wherein the recording and/or control initiating device is designed for detecting an attachment of the border sensing device to the green area maintenance robot and for activating the control.

10. The green area maintenance system (10) as claimed in one of the preceding claims, having:
- an output device (98), the output device being designed for outputting the recorded series of border data (x1, y1, B1) and/or a series of data (x2, y2) based on the recorded series of border data, and
- an input device (99), the input device being designed for processing the recorded series of border data (x1, y1, B1) and/or a series of data (x2, y2) based on the recorded series of border data.

11. The green area maintenance system (10) as claimed in one of the preceding claims,
- wherein the border sensing device (30, 70) comprises a sensing transmission unit (39, 79) for the transmission of the sensed position-related data (x1, y1, x3, y3, B1, B3), and/or
- wherein the recording device (40) comprises a recording transmission unit (49) for the transmission of the border data (x1, y1, B1) sensed by means of the border sensing device and/or the recorded series of border data (x1, y1, B1), and/or
- wherein the control unit (80) comprises a control transmission unit (89) for the transmission of the robot data (x3, y3, B3) sensed by means of the border sensing device and/or the recorded series of border data (x1, y1, B1) and/or a series of data (x2, y2) based on the recorded series of border data.

12. The green area maintenance system (10) as claimed in one of the preceding claims,
- wherein the autonomous mobile green area maintenance robot (60) is designed as a lawnmowing robot with a lawnmowing tool (63).

13. A method for sensing at least one section (102) of a delimiting border (101) of an area to be maintained (100) by means of a green area maintenance system (10), in particular as claimed in one of the preceding claims, having an autonomous mobile green area maintenance robot (60), a border sensing device (30, 70) for sensing position-related data (x1, y1, x3, y3, B1, B3) of the delimiting border (101), the border sensing device being designed for detachable attachment to the green area maintenance robot, and a recording device (40), the recording device being designed for the purpose of recording a series of border data (x1, y1, B1) sensed by means of the border sensing device of the delimiting border, wherein the method comprises the steps of:
a) guiding the border sensing device (30, 70), detached from the autonomous mobile green area maintenance robot (60), along at least the section (102) of the delimiting border (101) of the area to be maintained (100),
b) sensing border data (x1, y1, B1) by means of the border sensing device during the guiding, and
c) recording the series of border data of the delimiting border by means of the recording device (40),
**characterized in**
- **that** the border sensing device (30, 70) comprises a rechargeable energy store (38, 78) for supplying the detached border sensing device with operating energy, and
- **that** the green area maintenance robot (60) is designed for the recharging of the energy store of the attached border sensing device.

14. A method for operating an autonomous mobile green area maintenance robot (60) of a green area maintenance system (10), in particular as claimed in one of claims 1 to 12, on an area to be maintained (100) with a delimiting border (101),
- wherein the method comprises the method as claimed in claim 13 for sensing at least one section (102) of the delimiting border (101),
- wherein the green area maintenance system (10) has a control unit (80), the control unit being designed for the purpose of controlling a movement of the green area maintenance robot on the area to be maintained (100) in dependence on robot data (x3, y3, B3) sensed by means of the border sensing device and the recorded series of border data (x1, y1, x2, y2, B1) while the border sensing device (30, 70) is attached to the green area maintenance robot in such a way that the green area maintenance robot stays on the area to be maintained, and
- wherein the method comprises the step of:
controlling a movement of the green area maintenance robot (60) with the border sensing device (30, 70) attached to the green area maintenance robot on the area to be maintained (100) in dependence on robot data (x3, y3, B3), in particular sensed by means of the border sensing device, and the recorded series of border data (x1, y1, x2, y2, B1) in such a way that the green area maintenance robot stays on the area to be maintained.

## Revendications

1. Système de traitement d'espaces verts (10), présentant :
- un robot de traitement d'espaces verts mobile autonome (60),
- un appareil d'acquisition de bord (30, 70) pour acquérir des données liées à la position (x1, y1, x3, y3, B1, B3) d'un bord de délimitation (101) d'une surface à traiter (100), l'appareil d'acquisition de bord étant configuré pour être fixé de manière amovible sur le robot de traitement d'espaces verts,
- un appareil d'enregistrement (40), l'appareil d'enregistrement étant configuré pour enregistrer, pendant que l'appareil d'acquisition de bord est détaché du robot de traitement d'espaces verts et est guidé le long du bord de délimitation, une séquence de données de bord (x1, y1, B1) du bord de délimitation acquises par l'appareil d'acquisition de bord, et
- une unité de commande (80), l'unité de commande étant configurée pour commander, pendant que l'appareil d'acquisition de bord est fixé au robot de traitement d'espaces verts, un déplacement du robot de traitement d'espaces verts sur la surface à traiter en fonction de données de robot (x3, y3, B3), notamment acquises au moyen de l'appareil d'acquisition de bord, et de la séquence enregistrée de données de bord (x1, y1, x2, y2, B1), de telle sorte que le robot de traitement d'espaces verts reste sur la surface à traiter,
**caractérisé en ce que**
- l'appareil d'acquisition de bord (30, 70) comprend un accumulateur d'énergie rechargeable (38, 78) pour alimenter l'appareil d'acquisition de bord détaché en énergie de fonctionnement, et
- le robot de traitement d'espaces verts (60) est configuré pour recharger l'accumulateur d'énergie de l'appareil d'acquisition de bord fixé.

2. Système de traitement d'espaces verts (10) selon la revendication 1,
- l'appareil d'acquisition de bord (30, 70) étant configuré sous forme portable, et/ou
- l'appareil d'enregistrement (40) étant configuré sous forme portable.

3. Système de traitement d'espaces verts (10) selon l'une quelconque des revendications précédentes,
- l'appareil d'acquisition de bord (30, 70) comprenant un appareil de détermination de position pour déterminer des coordonnées de position (x1, y1, x3, y3),
- l'appareil d'enregistrement (40) étant configuré pour enregistrer une séquence de coordonnées de position de bord (x1, y1) du bord de délimitation (101) déterminées par l'appareil de détermination de position, et
- l'unité de commande (80) étant configurée pour commander le déplacement du robot de traitement d'espaces verts (60) sur la surface à traiter (100) en fonction notamment de coordonnées de position de robot (x3, y3) déterminées au moyen de l'appareil de détermination de position et de la séquence enregistrée de coordonnées de position de bord (x1, y1, x2, y2), de telle sorte que le robot de traitement d'espaces verts reste sur la surface à traiter.

4. Système de traitement d'espaces verts (10) selon la revendication 3,
- l'appareil de détermination de position (30, 70) comprenant un récepteur de détermination de position de satellite (31, 71) pour déterminer des coordonnées de position (x1, y1, x3, y3), et/ou
- l'appareil de détermination de position (30, 70) comprenant un appareil de système de positionnement local (35, 75) pour déterminer des coordonnées de position (x1, y1, x3, y3).

5. Système de traitement d'espaces verts (10) selon l'une quelconque des revendications précédentes,
- l'appareil d'acquisition de bord (30, 70) comprenant une caméra (37, 77) pour prendre des images (B1, B3) du bord de délimitation (101),
- l'appareil d'enregistrement (40) étant configuré pour enregistrer une séquence d'images de bord (B1) du bord de délimitation (101) prises au moyen de la caméra, et
- l'unité de commande (80) étant configurée pour commander le déplacement du robot de traitement d'espaces verts (60) sur la surface à traiter (100) en fonction d'images de robot (B3), notamment prises au moyen de la caméra, et de la séquence enregistrée d'images de bord (B1), de telle sorte que le robot de traitement d'espaces verts reste sur la surface à traiter.

6. Système de traitement d'espaces verts (10) selon l'une quelconque des revendications précédentes, présentant :
- un dispositif de guidage (20) présentant un dispositif de guidage par l'utilisateur (21), le dispositif de guidage par l'utilisateur étant configuré pour le guidage du dispositif de guidage par un utilisateur (200), et une zone de fixation (27) agencée à une distance (D1) du dispositif de guidage par l'utilisateur,
- l'appareil d'acquisition de bord (30, 70) étant configuré pour être fixé de manière amovible au dispositif de guidage dans la zone de fixation.

7. Système de traitement d'espaces verts (10) selon la revendication 6,
- le dispositif de guidage (20) étant une débroussailleuse.

8. Système de traitement d'espaces verts (10) selon l'une quelconque des revendications précédentes, présentant :
- un mécanisme de déclenchement d'enregistrement et/ou de commande (45, 46), le mécanisme de déclenchement d'enregistrement et/ou de commande étant configuré pour activer et/ou désactiver l'enregistrement, notamment au moyen de l'appareil d'enregistrement (40), et/ou la commande, notamment au moyen de l'unité de commande (80) .

9. Système de traitement d'espaces verts (10) selon la revendication 8,
- le mécanisme de déclenchement d'enregistrement et/ou de commande (46) étant configuré pour détecter un détachement de l'appareil d'acquisition de bord (30, 70) du robot de traitement d'espaces verts (60) et pour désactiver la commande, et/ou
- le mécanisme de déclenchement d'enregistrement et/ou de commande étant configuré pour détecter une fixation de l'appareil d'acquisition de bord sur le dispositif de guidage (20) et pour activer l'enregistrement, et/ou
le mécanisme de déclenchement d'enregistrement et/ou de commande étant configuré pour détecter un détachement de l'appareil d'acquisition de bord du dispositif de guidage et pour désactiver l'enregistrement, et/ou
- le mécanisme de déclenchement d'enregistrement et/ou de commande étant configuré pour détecter une fixation de l'appareil d'acquisition de bord sur le robot de traitement d'espaces verts et pour activer la commande.

10. Système de traitement d'espaces verts (10) selon l'une quelconque des revendications précédentes, présentant :
- un appareil de sortie (98), l'appareil de sortie étant configuré pour délivrer la séquence enregistrée de données de bord (x1, y1, B1) et/ou une séquence de données (x2, y2) fondée sur la séquence enregistrée de données de bord, et
- un appareil d'entrée (99), l'appareil d'entrée étant configuré pour traiter la séquence enregistrée de données de bord (x1, y1, B1) et/ou une séquence de données (x2, y2) fondée sur la séquence enregistrée de données de bord.

11. Système de traitement d'espaces verts (10) selon l'une quelconque des revendications précédentes,
- l'appareil d'acquisition de bord (30, 70) comprenant une unité de transmission d'acquisition (39, 79) pour transmettre les données liées à la position acquises (x1, y1, x3, y3, B1, B3), et/ou
- l'appareil d'enregistrement (40) comprenant une unité de transmission d'enregistrement (49) pour transmettre les données de bord (x1, y1, B1) acquises au moyen de l'appareil d'acquisition de bord et/ou la séquence enregistrée de données de bord (x1, y1, B1), et/ou
- l'unité de commande (80) comprenant une unité de transmission de commande (89) pour transmettre les données de robot (x3, y3, B3) acquises au moyen de l'appareil d'acquisition de bord et/ou la séquence enregistrée de données de bord (x1, y1, B1) et/ou une séquence de données (x2, y2) fondée sur la séquence enregistrée de données de bord.

12. Système de traitement d'espaces verts (10) selon l'une quelconque des revendications précédentes,
- le robot de traitement d'espaces verts mobile autonome (60) étant configuré sous la forme d'un robot de tonte de gazon avec un outil de tonte de gazon (63).

13. Procédé d'acquisition d'au moins une portion (102) d'un bord de délimitation (101) d'une surface à traiter (100) au moyen d'un système de traitement d'espaces verts (10), notamment selon l'une quelconque des revendications précédentes, présentant un robot de traitement d'espaces verts mobile autonome (60), un appareil d'acquisition de bord (30, 70) pour acquérir des données liées à la position (x1, y1, x3, y3, B1, B3) du bord de délimitation (101), l'appareil d'acquisition de bord étant configuré pour être fixé de manière amovible au robot de traitement d'espaces verts, et un appareil d'enregistrement (40), l'appareil d'enregistrement étant configuré pour enregistrer une séquence de données de bord (x1, y1, B1) du bord de délimitation acquises au moyen de l'appareil d'acquisition de bord, le procédé présentant les étapes suivantes :
a) le guidage de l'appareil d'acquisition de bord (30, 70) détaché du robot de traitement d'espaces verts mobile autonome (60) le long d'au moins la portion (102) du bord de délimitation (101) de la surface à traiter (100),
b) l'acquisition de données de bord (x1, y1, B1) au moyen de l'appareil d'acquisition de bord pendant le guidage, et
c) l'enregistrement de la séquence de données de bord du bord de délimitation au moyen de l'appareil d'enregistrement (40),
**caractérisé en ce que**
- l'appareil d'acquisition de bord (30, 70) comprend un accumulateur d'énergie rechargeable (38, 78) pour alimenter l'appareil d'acquisition de bord détaché en énergie de fonctionnement, et
- le robot de traitement d'espaces verts (60) est configuré pour recharger l'accumulateur d'énergie de l'appareil d'acquisition de bord fixé.

14. Procédé pour faire fonctionner un robot de traitement d'espaces verts mobile autonome (60) d'un système de traitement d'espaces verts (10), notamment selon l'une quelconque des revendications 1 à 12, sur une surface à traiter (100) avec un bord de délimitation (101),
- le procédé comprenant le procédé selon la revendication 13 pour acquérir au moins une portion (102) du bord de délimitation (101),
- le système de traitement d'espaces verts (10) présentant une unité de commande (80), l'unité de commande étant configurée pour commander, pendant que l'appareil d'acquisition de bord (30, 70) est fixé au robot de traitement d'espaces verts, un déplacement du robot de traitement d'espaces verts sur la surface à traiter (100) en fonction des données de robot (x3, y3, B3), notamment acquises au moyen de l'appareil d'acquisition de bord, et de la séquence enregistrée de données de bord (x1, y1, x2, y2, B1), de telle sorte que le robot de traitement d'espaces verts reste sur la surface à traiter, et
- le procédé présentant l'étape suivante :
la commande d'un déplacement du robot de traitement d'espaces verts (60) avec l'appareil d'acquisition de bord (30, 70) fixé au robot de traitement d'espaces verts sur la surface à traiter (100) en fonction de données de robot (x3, y3, B3), notamment acquises au moyen de l'appareil d'acquisition de bord, et de la séquence enregistrée de données de bord (x1, y1, x2, y2, B1), de telle sorte que le robot de traitement d'espaces verts reste sur la surface à traiter.
